(19) **Europäisches Patentamt / European Patent Office / Office européen des brevets**

(11) **EP 2 979 862 B1**

(12) **EUROPEAN PATENT SPECIFICATION**

(45) Date of publication and mention
of the grant of the patent:
**04.07.2018 Bulletin 2018/27**

(21) Application number: **14773481.8**

(22) Date of filing: **25.03.2014**

(51) Int Cl.:
*B05D 7/04* (2006.01)     *B05D 7/24* (2006.01)
*B32B 27/18* (2006.01)    *B32B 27/30* (2006.01)
*B32B 27/36* (2006.01)    *C08J 7/04* (2006.01)
*B32B 25/08* (2006.01)    *B32B 27/08* (2006.01)
*C09C 1/36* (2006.01)     *C09D 151/06* (2006.01)
*C09D 183/04* (2006.01)   *B32B 27/20* (2006.01)
*C01G 23/053* (2006.01)   *C09C 1/04* (2006.01)

(86) International application number:
**PCT/JP2014/058200**

(87) International publication number:
**WO 2014/157149 (02.10.2014 Gazette 2014/40)**

(54) **POLYCARBONATE RESIN LAMINATE**

POLYCARBONATHARZLAMINAT

STRATIFIÉ EN RÉSINE DE POLYCARBONATE

(84) Designated Contracting States:
**DE FR**

(30) Priority: **26.03.2013 JP 2013063721**

(43) Date of publication of application:
**03.02.2016 Bulletin 2016/05**

(73) Proprietors:
• **Shin-Etsu Chemical Co., Ltd.**
  **Tokyo 100-0004 (JP)**
• **Teijin Limited**
  **Osaka-shi, Osaka 541-0054 (JP)**

(72) Inventors:
• **UZAWA Yukiko**
  **Matsuyama-shi**
  **Ehime 791-8041 (JP)**
• **KISHIMOTO Hiroshi**
  **Matsuyama-shi**
  **Ehime 791-8041 (JP)**

• **HIGUCHI Koichi**
  **Annaka-shi**
  **Gunma 379-0224 (JP)**
• **MASUDA Kohei**
  **Annaka-shi**
  **Gunma 379-0224 (JP)**

(74) Representative: **Stoner, Gerard Patrick**
  **Mewburn Ellis LLP**
  **City Tower**
  **40 Basinghall Street**
  **London EC2V 5DE (GB)**

(56) References cited:
**EP-A1- 2 428 491      EP-A1- 2 708 513**
**EP-A2- 1 174 260      EP-A2- 2 364 844**
**JP-A- 2009 279 806    JP-A- 2012 077 267**
**JP-A- 2012 111 142    JP-A- 2014 019 611**

**Description**

TECHNICAL FIELD

This invention relates to a laminate comprising a multilayer substrate comprising a polycarbonate resin layer and a UV-absorptive thermoplastic resin layer formed and laminated on one surface or both surfaces of the polycarbonate resin layer, and a specific hard coat layer formed thereon.

More particularly, it relates to a polycarbonate resin laminate of a type wherein the silicone hard coat layer is a layer formed by coating and curing a silicone hard coat composition, the silicone hard coat composition comprising a core/shell type tetragonal titanium oxide solid solution dispersion which is a dispersion of core/shell type tetragonal titanium oxide solid solution particles in at least one dispersing medium. The polycarbonate resin laminate herein has improved mar resistance, UV shielding and outdoor durability and being more preferably such that it may crack at a radius of curvature R of up to 100 in a three-point flexural test according to JIS K7171.

BACKGROUND ART

Since polycarbonate resins have improved transparency, impact resistance, and a high heat distortion temperature, and are improved in dimensional stability and workability, they are used in various applications where glass is used in the prior art, including windows, optical lenses, mirrors, eyeglasses, goggles, noise barriers, signal lenses, curve mirrors, windshields, and nameplates. However, polycarbonate resins are insufficient in weather resistance. It is known from the past to coat polycarbonate resin layers with UV absorber-containing acrylic resins by laminating, coating and co-extrusion techniques.

As one example of the laminate of a polycarbonate resin layer overlaid with an acrylic resin film, Patent Document 1 discloses a laminate having improved pencil hardness as well as abrasion resistance and chemical resistance. On long-term outdoor use, a problem arises that delamination occurs at the interface between the polycarbonate resin layer and the acrylic resin film.

Also, as a laminate additionally possessing weather resistance and mar resistance due to coating, there are proposed UV-absorbing transparent substrates on which a protective layer of colloidal silica-laden polysiloxane coating composition is formed via an acrylic primer layer having a UV absorber added thereto. For example, Patent Documents 2 to 9 propose a method of adding a UV absorber to a primer layer, a method of incorporating UV-absorptive organic substituent groups into a primer-forming organic resin via chemical bonds, and a method of adding inorganic oxide microparticles having UV shielding properties to a colloidal silica-laden polysiloxane coating composition. As used herein, the UV absorber and the UV-absorptive organic substituent groups refer to, for example, substituent groups of benzophenone, benzotriazole and triazine, and organic compounds containing these groups. Also, the inorganic oxide microparticles having UV shielding properties refer to, for example, zinc oxide and titanium oxide microparticles.

In these examples, however, a primer composition containing a UV absorber component must be separately prepared. In the step of coating the primer, a coating environment capable of preventing entry of debris, dust and dirt and a heating unit for curing are necessary. The step is complex and includes multiple stages, leading to a drawback in economy.

In particular, the addition of a large amount of UV absorber to primer coating composition has detrimental impacts. For example, the UV absorber aggravates the adhesion to a protective film of a colloidal silica-laden polysiloxane coating composition coated on a substrate or the primer layer, the UV absorber is removed from the composition as by volatilization during the heat curing step, and on long-term outdoor use, the UV absorber gradually bleeds out, leading to cracking and whitening or yellowing. A further problem is that it is prohibited from the aspect of mar resistance to add a large amount of the UV absorber to the overlying protective coating layer of colloidal silica-laden polysiloxane.

Also, when the polycarbonate resin laminate is used in the building material application, not only weather resistance, but bending workability is also necessary. Undesirably the above-mentioned laminate including two layers of thermosetting coating compositions on polycarbonate resin was found to crack on bend-working.

On the other hand, as the means of solving the above problems, especially simplifying the steps and improving economy, while achieving weather resistance and mar resistance, there is disclosed a method of coating a silicone hard coat onto a multilayer substrate formed by co-extrusion or the like. For example, Patent Document 10 discloses a laminate which is improved in weather resistance and mar resistance as well as adhesion and crack resistance by providing a specific difference in coefficient of linear expansion between a substrate and an acrylic resin layer and a specific difference in coefficient of linear expansion between the acrylic resin layer and an organosiloxane resin layer.

Also, Patent Document 11 discloses a laminate comprising a substrate formed by co-extruding a polycarbonate base layer and an acrylic layer, and a hard coat layer thereon containing zinc oxide microparticles as UV cutting agent. Patent Documents 10 and 11 are still insufficient in UV shielding properties and outdoor durability and refer nowhere to bend-working.

Our earlier-dated EP2708513A, published after the present priority date, discloses a coated article comprising an organic resin substrate, a primer film disposed on at least one surface of the substrate, the primer film comprising a vinyl copolymer having an organic UV-absorbing group and an alkoxysilyl group on a side chain, and a cured film of a UV-shielding silicone coating composition. Polycarbonate resin substrates are preferred, and coextrusion or lamination is used for making the coated article.

PRIOR ART DOCUMENTS

PATENT DOCUMENTS

Patent Document 1: JP-A 2001-198947
Patent Document 2: JP-A S56-92059
Patent Document 3: JP-A H01-149878
Patent Document 4: JP-A H04-106161
Patent Document 5: JP 3102696
Patent Document 6: JP-A 2001-047574
Patent Document 7: JP 3841141
Patent Document 8: JP-A 2010-202731
Patent Document 9: JP-A 2012-077267
Patent Document 10: JP-A 2004-001393
Patent Document 11: JP-A 2011-183758

SUMMARY OF THE INVENTION

PROBLEMS TO BE SOLVED BY THE INVENTION

An object of the invention is to provide a polycarbonate resin laminate having improved mar resistance, UV shielding properties, outdoor durability, and bend workability.

MEANS FOR SOLVING THE PROBLEMS

The invention solves the above problems by the following construction.

[1] A polycarbonate resin laminate according to claim 1, comprising a multilayer substrate comprising a polycarbonate resin layer (layer A) and a UV-absorptive thermoplastic resin layer (layer B) formed and laminated on one surface or both surfaces of layer A, and a silicone hard coat layer (layer C) formed on the UV-absorptive thermoplastic resin layer by coating and curing a silicone hard coat composition thereto, wherein
layer B is formed of a thermoplastic resin containing a benzotriazole or triazine as a UV absorber, and
layer C is a cured film of a said silicone hard coat composition comprising the following components (c-1) to (c-5):

(c-1) a core/shell type tetragonal titanium oxide solid solution dispersion which is a dispersion of core/shell type tetragonal titanium oxide solid solution particles in at least one dispersing medium selected from water and alcohols, the core/shell type tetragonal titanium oxide solid solution particles each consisting of a core of nano-particulate tetragonal titanium oxide having tin and manganese incorporated in solid solution and a shell of silicon oxide around the core, the nano-particulate cores having a volume basis 50% cumulative distribution diameter ($D_{50}$) of up to 30 nm as measured by a dynamic light scattering method using laser light, the core/shell type solid solution particles having a volume basis 50% cumulative distribution diameter ($D_{50}$) of up to 50 nm, the amount of tin incorporated in solid solution providing a molar ratio Ti/Sn of 10 to 1,000 and the amount of manganese incorporated in solid solution providing a molar ratio Ti/Mn of 10 to 1,000,
(c-2) silicone resin obtained from (co)hydrolytic condensation of at least one of alkoxysilanes having the general formula (1) and partial hydrolytic condensates thereof,

$$(R^1)_m(R^2)_n Si(OR^3)_{4-m-n} \qquad (1)$$

wherein $R^1$ and $R^2$ are each independently hydrogen or a substituted or unsubstituted monovalent hydrocarbon group, $R^1$ and $R^2$ may bond together, $R^3$ is $C_1$-$C_3$ alkyl, m and n are independently 0 or 1 and m+n is 0, 1 or 2,

(c-3) a curing catalyst,
(c-4) a solvent, and optionally,
(c-5) colloidal silica;

the solid content of the core/shell type tetragonal titanium oxide solid solution dispersion (c-1) being 1 to 30% by weight based on the solid content of the silicone resin (c-2).

[2] The polycarbonate resin laminate of [1] wherein the multilayer substrate is prepared by forming and laminating the polycarbonate resin layer (layer A) and the UV-absorptive thermoplastic resin layer (layer B) by any one of co-extrusion, thermocompression bonding, and insert molding techniques.

[3] The polycarbonate resin laminate of [1] or [2] wherein the UV-absorptive thermoplastic resin layer (layer B) is formed of a (meth)acrylic resin composition.

[4] The polycarbonate resin laminate of any one of [1] to [3] wherein the UV-absorptive thermoplastic resin layer (layer B) comprises a (meth)acrylic rubber component.

[5] The polycarbonate resin laminate of any one of [1] to [4] wherein the solid content of the silicone resin (c-2) is 100 parts by weight, and the colloidal silica (c-5) is present in an amount of 5 to 100 parts by weight.

[6] The polycarbonate resin laminate of any one of [1] to [5] which cracks at a radius of curvature R of up to 100 mm in a three-point flexural test according to JIS K7171.

[7] A bonded structure comprising a structural member bonded and attached onto the thermoplastic resin layer (layer B) or hard coat layer (layer C) of a polycarbonate resin laminate of any one of [1] to [6], via a bonding primer layer and an elastic adhesive layer in sequence.

## ADVANTAGEOUS EFFECTS OF THE INVENTION

Since a multilayer substrate comprising a polycarbonate resin layer (layer A) and a UV-absorptive thermoplastic resin layer (layer B) formed and laminated thereon is coated with a specific hard coat layer, the laminate of the invention is improved in mar resistance, UV shielding, outdoor durability, and bend workability. Thus the industrial utility of the laminate is outstanding.

## BRIEF DESCRIPTION OF THE DIAGRAMS

[Fig. 1] FIG. 1 is a schematic view of a jig for the quarter ellipse test method for performing critical stress evaluation.
[Fig. 2] FIG. 2 is a diagram showing transmittance vs. wavelength of various hard coat layers.

## EMBODIMENT FOR CARRYING OUT THE INVENTION

Now the invention is described in detail.

(i) Polycarbonate resin layer (layer A)

The polycarbonate resin used herein is preferably a bisphenol A polycarbonate, although it may also be selected from a variety of polycarbonate resins polymerized from other dihydric phenols and having high heat resistance and low water absorption, and a variety of polycarbonate resins polymerized from aliphatic diols and having high heat resistance. The polycarbonate resin may be prepared by any preparation methods. In the case of interfacial polycondensation, an endcapping agent, typically a monohydric phenol is used. The polycarbonate resin may also be a branched polycarbonate resin obtained from polymerization of a trifunctional phenol or a polycarbonate copolymer having an aliphatic or aromatic dicarboxylic acid or a dihydric aliphatic or alicyclic alcohol copolymerized. The polycarbonate resin is applicable over a wide variety of fields when it has a viscosity average molecular weight in the range of 13,000 to 40,000. A polycarbonate resin having a viscosity average molecular weight of less than 20,000 has good flow and is suited for molded resin parts of complex shape or large size (e.g., backdoor windows) among vehicle-mount resin windows, whereas a polycarbonate resin having a viscosity average molecular weight of at least 20,000 has a high strength and is suited for all-round vehicle-mount resin windows. For vehicle-mount resin windows to which the invention is advantageously applicable, a choice of molecular weight in accordance with the desired molded part is necessary. Since the resin plate used herein is thick walled, the strain induced during molding is within the acceptable limit even when the resin has a relatively high molecular weight. It is preferred for versatility that the upper limit of viscosity average molecular weight be 35,000, more preferably 30,000.

With respect to viscosity average molecular weight, it suffices that the overall polycarbonate resin meets the above-defined range, suggesting to encompass a mixture of two or more polycarbonate resins having different molecular weights which meets the above-defined range. In particular, a mixture of polycarbonate resins so as to have a viscosity average molecular weight of more than 50,000 (more preferably at least 80,000, even more preferably at least 100,000) is sometimes advantageous in that the entropic elasticity during melting is increased. For example, it is effective for suppressing jetting. The effect exerted by an increase of entropic elasticity becomes more outstanding as the molecular weight of polycarbonate becomes higher. In practice, the upper limit of molecular weight is 2,000,000, preferably 300,000, and more preferably 200,000. By blending 0.5 to 20% by weight, preferably 1 to 10% by weight of such a polycarbonate resin, the desired effect is achievable without substantially impairing moldability.

The viscosity average molecular weight (M) of a polycarbonate resin is determined by dissolving 0.7 g of the polycarbonate resin in 100 ml of methylene chloride, measuring the specific viscosity ($\eta_{sp}$) of the solution at 20°C, and inserting the specific viscosity into the following formula wherein [$\eta$] is an intrinsic viscosity.

$$\eta_{sp}/c \ = \ [\eta] \ + \ 0.45 \times [\eta]^{2} c$$

$$[\eta] \ = \ 1.23 \times 10^{-4} * M^{0.83}$$

$$c \ = \ 0.7$$

For the detail of polycarbonate resin, reference is made to JP-A 2002-129003, for example.

Preferred examples of the polycarbonate resins polymerized from other dihydric phenols and having high heat resistance and low water absorption include those shown below.

(1) Polycarbonate copolymers derived from a dihydric phenol component (100 mol%) which is composed of 20 to 80 mol%, more preferably 40 to 75 mol%, and even more preferably 45 to 65 mol% of 4,4'-(m-phenylene diisopropylidene)diphenol (abbreviated as "BPM", hereinafter) and 20 to 80 mol%, more preferably 25 to 60 mol%, and even more preferably 35 to 55 mol% of 9,9-bis(4-hydroxy-3-methylphenyl)fluorene (abbreviated as "BCF", hereinafter).

(2) Polycarbonate copolymers derived from a dihydric phenol component (100 mol%) which is composed of 10 to 95 mol%, more preferably 50 to 90 mol%, and even more preferably 60 to 85 mol% of bisphenol A and 5 to 90 mol%, more preferably 10 to 50 mol%, and even more preferably 15 to 40 mol% of BCF.

(3) Polycarbonate copolymers derived from a dihydric phenol component (100 mol%) which is composed of 20 to 80 mol%, more preferably 40 to 75 mol%, and even more preferably 45 to 65 mol% of BPM and 20 to 80 mol%, more preferably 25 to 60 mol%, and even more preferably 35 to 55 mol% of 1,1-bis(4-hydroxyphenyl)-3,3,5-trimethylcyclohexane.

(4) Polycarbonate copolymers derived from a dihydric phenol component (100 mol%) which is composed of 40 to 90 mol%, more preferably 50 to 80 mol% of 2,2-bis(4-hydroxy-3-methylphenyl)propane (abbreviated as "bisphenol C", hereinafter) and 10 to 60 mol%, more preferably 20 to 50 mol% of bisphenol A.

Examples of the polycarbonate resins polymerized from aliphatic diols and having high heat resistance include those polycarbonates derived from aliphatic diols which are isosorbide, isomannide and isoidide. Among others, isosorbide (1,4;3,6-dianhydro-D-sorbitol) is preferred for ease of preparation and heat resistance.

These special polycarbonates may be used alone or in admixture of two or more. Also, they may be used in admixture with commonly used bisphenol A polycarbonate.

The preparation methods and properties of these special polycarbonates are described, for example, in JP-A H06-172508, JP-A H08-027370, JP-A 2001-055435, and JP-A 2002-117580.

The polycarbonate resin described above may contain various prior art well-known additives as long as transparency is not impaired. Suitable additives include, for example, a heat stabilizer, antioxidant, UV absorber, photostabilizer, colorant, parting agent, lubricant, IR absorber, light diffusing agent, fluorescent brightener, antistatic agent, flame retardant, flame retardant aid, plasticizer, reinforcing filler, impact modifier, photo-catalytic antifouling agent, and photochromic agent. Notably, the heat stabilizer, antioxidant, UV absorber, photo-stabilizer, colorant, parting agent and the like may be blended in appropriate amounts as are well known for prior art polycarbonate resins.

(ii) Thermoplastic resin layer (layer B)

The thermoplastic resin used herein is not particularly limited and examples thereof include polyolefin resins such as polyethylene and polypropylene, amorphous polyolefin resins such as polydicyclopentadiene, polycarbonate resins, acrylic resins such as polymethyl methacrylate, polyester resins such as polyethylene terephthalate, polybutylene terephthalate, and poly(ethylene-2,6-naphthalate), polystyrene, polyarylate, polyether sulfone, polyether ether ketone, polyimides, phenolic resins, and urea resins. Preferred among others are polycarbonate resins having improved transparency, acrylic resins such as polymethyl methacrylate, polyester resins such as polyethylene terephthalate, polybutylene terephthalate, and poly(ethylene-2,6-naphthalate), polystyrene, polypropylene, polyarylate, and polyether sulfone. Specifically, commercially available resins may be used, for example, VH001 and IRG304 from Mitsubishi Rayon Co., Ltd., hw55 from Daicel-Evonik Ltd., HT121 from Arkema Group, Parapet HR-L, Parapet GR01240, and Parapet GR01270 from Kuraray Co., Ltd., and PM120N from Asahi Kasei Chemicals Corp.

The thermoplastic resin layer preferably has a thickness of 50 um to 200 $\mu$m, more preferably 60 $\mu$m to 180 $\mu$m. A thickness equal to or more than the lower limit is preferable because sufficient weatherability and mar resistance are available. A thickness equal to or less than the upper limit is preferable because the thermoplastic resin layer avoids any reduction of environment resistance and any reduction of impact resistance due to the moisture absorption of the thermoplastic resin layer, and substantially prevents the substrate from cracking upon bending.

The thermoplastic resin layer used herein is formed of a UV absorptive thermoplastic resin composition. The purpose of imparting a UV absorbing function may be achieved by adding an organic or inorganic UV absorber to a thermoplastic resin or incorporating UV absorbing groups fixedly into a thermoplastic resin. The organic UV absorber is preferable for weatherability improvement. Inter alia, benzotriazole and triazine UV absorbers are preferred because of slow photo-decomposition rates and good durability.

Inter alia, triazine UV absorbers are more preferred. The amount of the organic UV absorber added to the thermoplastic resin is preferably 0.3 to 35.0 parts, more preferably 1.0 to 25.0 parts, and even more preferably 2.0 to 15.0 parts by weight per 100 parts by weight of the thermoplastic resin.

As the inorganic UV absorber, metal oxide microparticles are preferred. Inter alia, metal oxide microparticles of at least one type selected from among titanium oxide microparticles, cerium oxide microparticles, and zinc oxide microparticles are preferred because of a relatively small bandgap and possible conversion of the absorbed light energy to energy not degrading organic resin. Inter alia, zinc oxide microparticles are especially preferred because of high transparency of a coating and good dispersion in a polar solvent.

The microparticulate metal oxide is preferably added in an amount of 0.1 to 16.0 parts, more preferably 1.0 to 8.0 parts, and even more preferably 2.0 to 6.0 parts by weight per 100 parts by weight of the thermoplastic resin. Amounts equal to or more than the lower limit are preferred for good weatherability whereas amounts equal to or less than the upper limit are preferred due to good adhesion between the thermoplastic resin layer and the organosiloxane resin layer.

Where UV absorbing groups are fixed, it is preferred that UV absorbing groups be bonded to parts of the thermoplastic resin skeleton. Typical are polymers obtained by copolymerizing a (meth)acrylic monomer having a UV absorbing group with another (meth)acrylic monomer copolymerizable therewith. The (meth)acrylic monomers having a UV absorbing group are preferably benzophenone, benzotriazole and benzotriazine type monomers, with benzotriazole type monomers being more preferred.

The amount of the (meth)acrylic monomer having a UV absorbing group used is preferably 1 to 40% by weight, more preferably 3 to 25% by weight of the copolymer composition. Less than 1 wt% of the (meth)acrylic monomer may fail to impart a satisfactory UV absorbing ability. If the amount is more than 40 wt%, the (meth)acrylic copolymer may have a low glass transition temperature, cracks may occur in the silicone hard coat layer (layer C) on the surface of the thermoplastic resin layer, and whitening may occur upon exposure to moisture.

To the thermoplastic resin layer used herein, a (meth)acrylic rubber component may be added for the purpose of imparting impact resistance and bend workability. The term "(meth)acrylic" refers to methacrylic or acrylic. The (meth)acrylic rubber component is a polymer comprising (meth)acrylic acid ester monomer units and polyfunctional monomer units as essential components.

The (meth)acrylic acid ester monomers are preferably (meth)acrylic acid alkyl esters having $C_1$-$C_{12}$ alkyl. For example, methyl (meth)acrylate, ethyl (meth)acrylate, propyl (meth)acrylate, n-butyl (meth)acrylate, isobutyl (meth)acrylate, t-butyl (meth)acrylate, and 2-ethylhexyl (meth)acrylate may be used. Those esters having $C_1$-$C_8$ alkyl are preferred. They may be used alone or in admixture of two or more.

The content of the (meth)acrylic acid ester monomer in the (meth)acrylic rubber component is preferably at least 75%, more preferably at least 85%, and even more preferably at least 95% by weight based on the (meth)acrylic rubber component which is 100% by weight. If the content of the (meth)acrylic acid ester monomer is less than the lower limit, the resulting (meth)acrylic rubber component and the thermoplastic resin layer (layer B) may lose any one of weatherability, impact resistance, rigidity, and outer appearance.

The total content of multifunctional monomer units in the (meth)acrylic rubber component is 0.3 to 3 parts, preferably up to 2 parts, more preferably up to 1.5 parts by weight and preferably at least 0.4 part, more preferably at least 0.5 part by weight per 100 parts by weight of the (meth)acrylic acid ester monomer units. If the content of multifunctional monomer units exceeds the upper limit, the resulting (meth)acrylic rubber component and the thermoplastic resin layer (layer B) may lose impact resistance. Below the lower limit, outer appearance may be degraded.

The multifunctional monomer unit is not particularly limited as long as it has a plurality of unsaturated bonds. It is preferred that a multifunctional monomer unit having two unsaturated bonds and a multifunctional monomer unit having three unsaturated bonds be present. If a multifunctional monomer having more than three unsaturated bonds is present, the resulting (meth)acrylic rubber component may undergo degradation of outer appearance and gelation.

Examples of the multifunctional monomer include allyl (meth)acrylate, di(meth)acrylic acid esters of diols such as ethylene glycol di(meth)acrylate, 1,3-butanediol di(meth)acrylate, and 1,6-hexanediol di(meth)acrylate, 2-propenyl (meth)acrylate, and divinyl benzene. Inter alia, (meth)acrylates having an allyl group such as allyl (meth)acrylate and 2-propenyl (meth)acrylate are preferred. Allyl (meth)acrylate is most preferred due to efficient improvements of physical properties of the resulting resin composition.

Examples of the multifunctional monomer having three or more unsaturated bonds include triallyl isocyanurate, triallyl cyanurate, and triallyl trimellitate, having an aromatic ring. Inter alia, triallyl isocyanurate and triallyl cyanurate having a triazine ring are preferred, with triallyl isocyanurate being most preferred for polymerization stability.

The multifunctional monomers having two unsaturated bonds and the multifunctional monomers having three unsaturated bonds may be used alone or in admixture of two or more.

In the (meth)acrylic rubber component comprising the acrylate monomer and the multifunctional monomer, another monomer copolymerizable with the acrylate monomer may be used if necessary.

Examples of the other monomer copolymerizable with the acrylate monomer include aromatic vinyl monomers such as styrene, $\alpha$-methylstyrene and p-methylstyrene and unsaturated nitrile base monomers such as acrylonitrile and methacrylonitrile. They may be used alone or in admixture of two or more.

Preferably, the (meth)acrylic rubber component is prepared by emulsion polymerization of a mixture of monomers as mentioned above.

An emulsifier is used for emulsion polymerization. The emulsifier is preferably an anionic emulsifier because of high stability of latex during emulsion polymerization and an increased rate of polymerization, though not limited thereto. The emulsifier may be used alone or in admixture of two or more.

The (meth)acrylic rubber component preferably has a volume average particle size of at least 100 nm, more preferably at least 200 nm. If the volume average particle size is below the lower limit, the resulting (meth)acrylic rubber nanoparticles and the thermoplastic resin layer (layer B) may degrade in impact resistance. The upper limit of the volume average particle size is preferably up to 900 nm, more preferably up to 600 nm. If the volume average particle size exceeds the upper limit, the resulting (meth)acrylic rubber component and the thermoplastic resin layer (layer B) may degrade in outer appearance.

In the (meth)acrylic rubber component, a vinyl monomer may be graft polymerized. The vinyl monomer used for graft polymerization is preferably selected from unsaturated nitrile monomers, aromatic vinyl monomers, and optionally, other monomers.

Suitable unsaturated nitrile monomers include, for example, acrylonitrile and methacrylonitrile. They may be used alone or in admixture of two or more.

Suitable aromatic vinyl monomers include, for example, styrene, $\alpha$-methylstyrene, and vinyl toluene. They may be used alone or in admixture of two or more.

The other monomers are monomers copolymerizable with the unsaturated nitrile monomers and aromatic vinyl monomers and excluding the unsaturated nitrile monomers and aromatic vinyl monomers. Examples of the other monomers include methyl (meth)acrylate, ethyl (meth)acrylate, n-butyl (meth)acrylate, 2-ethylhexyl (meth)acrylate, glycidyl (meth)acrylate, N,N-dimethylaminoethyl (meth)acrylate, N-dimethylaminoethyl, (meth)acrylamide, maleic anhydride, and N-substituted maleimides. The other monomers may also be used alone or in admixture of two or more.

The vinyl monomer to be graft polymerized to the (meth)acrylic rubber component is preferably a mixture of an aromatic vinyl monomer such as styrene and an unsaturated nitrile monomer such as acrylonitrile, most preferably a mixture of styrene and acrylonitrile, because the resulting molded part has improved impact resistance.

The amount of the (meth)acrylic rubber component added is preferably 0 to 30 parts, more preferably 0.1 to 20 parts by weight per 100 parts by weight of the resin component in the thermoplastic resin composition. As long as the amount of the (meth)acrylic rubber component added to the thermoplastic resin composition is within the upper limit, the resulting thermoplastic resin layer (layer B) may maintain good outer appearance and flow.

It is noted that if necessary, other components may be blended in the thermoplastic resin composition, for example, organic dyes, inorganic dyes, pigments, antioxidants, antistatic agents, and surfactants.

(iii) Hard coat layer (layer C)

The hard coat layer used herein is constructed by coating and curing a specific silicone hard coat composition. More particularly, the silicone hard coat composition used herein preferably comprises (c-1) a core/shell type tetragonal titanium oxide solid solution dispersion, (c-2) a silicone resin obtained from (co)hydrolytic condensation of at least one member selected from a specific alkoxysilane and a partial hydrolytic condensate thereof, (c-3) a curing catalyst, (c-4) a solvent, and optionally, (c-5) colloidal silica, wherein the solid content of the core/shell type tetragonal titanium oxide solid solution dispersion (c-1) is 1 to 30% by weight relative to the solid content of the silicone resin (c-2).

Component (c-1)

Component (c-1) is a core/shell type tetragonal titanium oxide solid solution dispersion which is a dispersion of core/shell type tetragonal titanium oxide solid solution particles in at least one dispersing medium selected from among water and alcohols, the core/shell type tetragonal titanium oxide solid solution particles each consisting of a core of nano-particulate tetragonal titanium oxide having at least one atom selected from among tin and manganese incorporated in solid solution and a shell of silicon oxide around the core, the nano-particulate cores having a volume basis 50% cumulative distribution diameter ($D_{50}$) of up to 30 nm as measured by a dynamic light scattering method using laser light, the core/shell type particles having a volume basis 50% cumulative distribution diameter ($D_{50}$) of up to 50 nm, and the total amount of M selected from tin and manganese incorporated in solid solution is to provide a molar ratio Ti/M of 10/1 to 1,000/1.

The amount of tin or manganese incorporated in solid solution is preferably to provide a molar ratio Ti/Sn of 10/1 to 1,000/1 or Ti/Mn of 10/1 to 1,000/1, more preferably Ti/Sn of 20/1 to 200/1 or Ti/Mn of 20/1 to 200/1. If the amount of tin or manganese in solid solution form is to provide a Ti/Sn or Ti/Mn molar ratio of less than 10, there is observed considerable light absorption in the visible region assigned to tin and manganese. If the Ti/Sn or Ti/Mn molar ratio exceeds 1,000, undesirably photocatalytic activity is not fully deprived and the crystal system takes the anatase form having a low visible light absorptivity.

The solid solution form of tin and manganese may be either substitutional or interstitial. The substitutional solid solution refers to a solid solution form in which the solid solution-forming atom substitutes at the site of titanium(IV) ion in titanium oxide. The interstitial solid solution refers to a solid solution form in which the solid solution-forming atom fits in the space between crystal lattices of titanium oxide. The interstitial type tends to create F-center which causes coloring, and due to poor symmetry around a metal ion, the Franck-Condon factor of electro-vibronic transition at the metal ion increases, leading to more absorption of visible light. For this reason, the substitution type is preferred.

The shell of silicon oxide formed around the core of nano-particulate tetragonal titanium oxide having tin or manganese incorporated in solid solution contains silicon oxide as the major component and may contain another component such as zirconium, tin or aluminum, while it may be formed by any desired techniques. For example, the shell of silicon oxide may be formed by hydrolytic condensation of a tetraalkoxysilane. Suitable tetraalkoxysilanes include tetramethoxysilane, tetraethoxysilane, tetra(n-propoxy)silane, tetra(i-propoxy)silane, and tetra(n-butoxy)silane, which are commonly available, with tetraethoxysilane being preferred from the aspects of reactivity and safety. As the silane, for example, KBE-04 commercially available from Shin-Etsu Chemical Co., Ltd. may be used. Hydrolytic condensation of a tetraalkoxysilane may be conducted in water, optionally in the presence of a condensation catalyst such as ammonia, aluminum salts, organoaluminum compounds, tin salts, or organotin compounds. Inter alia, ammonia is especially preferred since it can simultaneously function as a dispersing agent for nano-particulate cores.

The core/shell type tetragonal titanium oxide solid-solution particles should have a volume basis 50% cumulative distribution diameter ($D_{50}$) of up to 50 nm, as measured by the dynamic light scattering method using laser light. If the D50 value of the nano-particulate cores or the core/shell type solid-solution particles exceeds the upper limit, undesirably the dispersion becomes opaque. It is noted that the volume basis 50% cumulative distribution diameter ($D_{50}$, also referred to as "average particle size") may be measured by an instrument such as Nanotrac UPA-EX150 (Nikkiso Co., Ltd.) or LA-910 (Horiba Ltd.).

The dispersing medium in which the core/shell type tetragonal titanium oxide solid solution particles are dispersed is at least one medium selected from among water and alcohols. Preferably the water used herein is, for example, deionized water (ion exchanged water), distilled water, pure water or the like. The preferred alcohols are lower alcohols such as methanol, ethanol and isopropanol. Inter alia, deionized water and pure water are most preferred for productivity and cost.

In the dispersion consisting of the core/shell type tetragonal titanium oxide solid solution particles and the dispersing medium, the core/shell type tetragonal titanium oxide solid solution particles are preferably present in a concentration of 0.1 to 30%, more preferably 5 to 15% by weight. It is acceptable that the dispersing medium contains a basic substance (dispersant) and other agents which are used in the preparation of the core/shell type tetragonal titanium oxide solid solution particles. In particular, since the basic substance has the functions of pH adjusting agent and dispersant, it may be used as an aqueous solution having a suitable concentration along with the dispersing medium. However, it is preferred that the dispersion of core/shell type tetragonal titanium oxide solid solution particles be free of any dispersants (other than the basic substance) such as polymeric dispersants. This is because the inclusion of a basic substance eliminates a positive need for a polymeric dispersant which is otherwise necessary as a dispersant for titanium oxide nanoparticles in the prior art, and accordingly avoids any detrimental impacts which are exerted on mar resistance and substrate adhesion of a coating or cured film when a titanium oxide nanoparticle dispersion containing a polymeric dispersant is applied to a hard coat composition.

Examples of the basic substance (dispersant) which can be present in the core/shell type tetragonal titanium oxide solid solution dispersion include ammonia, alkali metal hydroxides, phosphate compounds, hydrogenphosphate compounds, carbonate compounds, and hydrogencarbonate compounds.

The core/shell type tetragonal titanium oxide solid solution dispersion thus constructed has high transparency. Specifically, the dispersion gives a transmittance of preferably at least 80%, more preferably at least 85%, and even more preferably at least 90%, when measured by transmitting light of wavelength 550 nm through a quartz cell having an optical path length of 1 mm which is filled with the core/shell type tetragonal titanium oxide solid solution dispersion diluted to a concentration of 1% by weight. The transmittance is readily determined by UV/visible transmission spectroscopy.

The core/shell type tetragonal titanium oxide solid solution dispersion as component (c-1) is characterized in that the photocatalytic activity of the dispersion is blocked since no fading is observed after addition of methylene blue and irradiation of black light.

The methylene blue fading test may be performed by adding methylene blue to a 0.5 wt% core/shell type tetragonal titanium oxide solid solution dispersion in a concentration of 0.01 mmol/L, filling a borosilicate glass vial with the dispersion, irradiating black light (UV irradiation intensity 0.5 mW/cm$^2$) for 24 hours, and colorimetric analysis. Fade is confirmed by a decline of absorbance at 653 nm. Preferably a percent decline of absorbance after the fading test is within 10%. If the percent decline is more than 10%, it is observed in the weathering test that the surface of the cured film (layer C) formed of the silicone hard coat composition undergoes partial degradation and cure shrinkage due to photocatalytic activity, allowing for premature formation of cracks.

Components (c-1) and (c-2) are blended such that the solid content of the core/shell type tetragonal titanium oxide solid solution dispersion (c-1) may be 1 to 30% by weight, preferably 3 to 20% by weight, more preferably 5 to 15% by weight relative to the solid content of the silicone resin (c-2). This is because a content of less than 1 wt% is insufficient to impart a UV-shielding ability to the composition whereas a content in excess of 30 wt% is undesired in that a coating formed from the composition is liable to cure shrinkage which causes cracks.

The method for preparing a dispersion of core/shell type tetragonal titanium oxide particles having at least one atom selected from cobalt, tin and manganese incorporated in solid solution comprises the following steps (A) to (D).

• Step (A)

In step (A), a water dispersion of tetragonal titanium oxide particles having at least one atom selected from tin and manganese incorporated in solid solution is first prepared. The technique of preparing the water dispersion is not particularly limited. In the preferred procedure, starting materials including a titanium compound, tin compound, manganese compound, basic substance and hydrogen peroxide are reacted in an aqueous dispersing medium to form a solution of peroxotitanic acid containing at least one atom selected from tin and manganese, which is subjected to hydrothermal reaction, yielding a water dispersion of tetragonal titanium oxide particles containing at least one atom selected from tin and manganese.

The former stage of reaction to form a solution of peroxotitanic acid containing at least one atom selected from tin and manganese may be one procedure involving the steps of adding a basic substance to a starting titanium compound in an aqueous dispersing medium to form titanium hydroxide, removing impurity ions, adding hydrogen peroxide to form peroxotitanic acid, adding a tin compound and/or manganese compound thereto to form a solution of peroxotitanic acid containing at least one atom selected from tin and manganese; or another procedure involving the steps of adding a tin compound and/or manganese compound to a starting titanium compound in an aqueous dispersing medium, adding a basic substance thereto to form titanium hydroxide containing at least one atom selected from tin and manganese, removing impurity ions, and adding hydrogen peroxide to form a solution of peroxotitanic acid containing at least one atom selected from tin and manganese.

Examples of the starting titanium compound include salts of titanium with mineral acids such as hydrochloride, nitrate and sulfate, salts of titanium with organic acids such as formate, citrate, oxalate, lactate and glycolate, and titanium hydroxide which is precipitated by adding alkali to such aqueous solution for hydrolysis. One or a mixture of two or more of the foregoing may be used.

Hydrogen peroxide serves to convert the starting titanium compound or titanium hydroxide to peroxotitanate, that is, a titanium oxide-base compound having Ti-O-O-Ti bond. Typically aqueous hydrogen peroxide is used. The amount of hydrogen peroxide added is preferably 1.5 to 5 times the total moles of Ti, Co, Sn and Mn. The reaction of hydrogen peroxide to convert the starting titanium compound or titanium hydroxide to peroxotitanic acid is preferably conducted at a temperature of 5 to 60°C and for a time of 30 minutes to 24 hours.

The peroxotitanic acid solution thus obtained may contain a basic or acidic substance for pH adjustment or the like. Exemplary basic substances include ammonia and analogs as mentioned above. Exemplary acidic substances include mineral acids such as sulfuric acid, nitric acid, hydrochloric acid, carbonic acid, phosphoric acid, and hydrogen peroxide, and organic acids such as formic acid, citric acid, oxalic acid, lactic acid, and glycolic acid. The peroxotitanic acid solution is preferably at pH 1 to 7, more preferably pH 4 to 7, for safe handling.

The later stage of reaction to form a dispersion of tetragonal titanium oxide particles having at least one atom selected from tin and manganese incorporated in solid solution is by subjecting the peroxotitanic acid solution to hydrothermal reaction under conditions: a pressure of 0.01 to 4.5 MPa, preferably 0.15 to 4.5 MPa, a temperature of 80 to 250°C, preferably 120 to 250°C, and a time of 1 minute to 24 hours. By this reaction, the peroxotitanic acid is converted to tetragonal titanium oxide particles having at least one atom selected from tin and manganese incorporated in solid solution.

In the invention, the dispersion of tetragonal titanium oxide particles having at least one atom selected from tin and manganese incorporated in solid solution is blended with a monohydric alcohol, ammonia, and a tetraalkoxysilane (e.g., tetraethoxysilane).

Examples of the monohydric alcohol used herein include methanol, ethanol, propanol, isopropyl alcohol, and a mixture thereof, with ethanol being preferred. An appropriate amount of the monohydric alcohol used is up to 100 parts, more preferably up to 50 parts by weight per 100 parts by weight of the titanium oxide particle dispersion. By changing the amount of the monohydric alcohol blended, the thickness of silicon oxide shells formed around cores of tetragonal titanium oxide in solid solution in the subsequent step can be controlled. In general, as the amount of the monohydric alcohol blended increases, the thickness of silicon oxide shells increases because the solubility of silicon reactant (tetraalkoxysilane) in the reaction system increases while the dispersed state of titanium oxide is not adversely affected at all. That is, the dispersion of core/shell type tetragonal titanium oxide particles having at least one atom selected from tin and manganese incorporated in solid solution form can be formed in the subsequent step so as to fall in a specific cumulative distribution diameter, without mechanical unit operations like pulverizing and sifting steps, while the dispersion can be endowed with transparency in the visible region.

Ammonia used herein is typically aqueous ammonia. Instead of addition of aqueous ammonia, ammonia gas may be blown into the dispersion of tetragonal titanium oxide particles in solid solution form. It is also acceptable to add a reagent capable of generating ammonia in the dispersion, instead of addition of aqueous ammonia. The concentration of aqueous ammonia is not particularly limited, and any commercially available aqueous ammonia may be used. In the preferred procedure, 28 wt% conc. aqueous ammonia is used and added until the dispersion of tetragonal titanium oxide particles in solid solution form reaches pH 9 to 12, more preferably pH 9.5 to 11.5.

The tetraalkoxysilane may be selected from the aforementioned examples, with tetraethoxysilane being preferred. Tetraethoxysilane may be used as such while a (partial) hydrolyzate of tetraethoxysilane is also useful. Tetraethoxysilane or (partial) hydrolyzate thereof may be any of commercially available products, for example, KBE-04 (tetraethoxysilane by Shin-Etsu Chemical Co., Ltd.), Silicate 35 and Silicate 45 (partial hydrolytic condensate of tetraethoxysilane, Tama Chemicals Co., Ltd.), and ES140 and ES148 (partial hydrolytic condensate of tetraethoxysilane, Colcoat Co., Ltd.). Tetraethoxysilane or analogs may be used alone or in admixture of two or more.

The tetraalkoxysilane is blended in such an amount as to give 20 to 50%, preferably 25 to 45%, and more preferably 30 to 40% by weight of silicon oxide after hydrolysis, based on the silicon oxide-coated titanium oxide. Less than 20 wt% of silicon oxide indicates insufficient shell formation whereas more than 50 wt% of silicon oxide may promote agglomeration of particles, rendering the dispersion opaque.

When the dispersion of tetragonal titanium oxide particles in solid solution form is blended with a monohydric alcohol, ammonia, and a tetraalkoxysilane (e.g., tetraethoxysilane), any suitable mixing techniques, for example, magnetic stirring, mechanical mixing, and shaker mixing may be used.

• Step (B)

In step (B), the mixture of step (A) is rapidly heated for forming core/shell type tetragonal titanium oxide solid-solution particles each consisting of a core of nano-particulate tetragonal titanium oxide in solid solution form and a shell of silicon oxide around the core.

The means of rapidly heating the mixture of step (A) may be any of the existing heating means, for example, microwave heating, a microreactor of high heat exchange efficiency, and heat exchanger with an external heat source of a high heat capacity. Inter alia, microwave heating is preferred because of uniform and rapid heating ability. The step of heating the mixture by applying microwave radiation may be either batchwise or continuous.

The rapid heating step is preferably at such a rate as to elevate the temperature from room temperature to immediately below the boiling point of the dispersing medium (typically lower by about 10 to 80°C than the boiling point) within a time of 10 minutes. If the heating step takes more than 10 minutes, undesirably the particles tend to agglomerate together.

Where the rapid heating step includes microwave heating, the electromagnetic wave may be selected from the frequency range of 300 MHz to 3 THz. For example, according to the Radio Law of Japan, the microwave frequency band that can be utilized is limited to 2.45 GHz, 5.8 GHz, 24 GHz and the like. Of these, the 2.45 GHz band is most often utilized on a commercial basis, and magnetron oscillators in this frequency band are available at an acceptable price. The microwave standard differs depending on the law, economical status and the like of a particular country or region. Technically the frequency need not be limited. As long as the rated power is in the range of 100 W to 24 kW, preferably 100 W to 20 kW, any commercial microwave heater may be used, for example, uReactor Ex (Shikoku Instrumentation Co., Inc.) or Advancer (Biotage Japan Ltd.).

Desired microwave heating may be completed within a time of 10 minutes by adjusting the power of the microwave heater and by adjusting the volume of reaction solution in the case of batchwise reaction or the flow rate of reaction solution in the case of continuous reaction.

• Step (C)

Step (C) is to remove water from the core/shell type tetragonal titanium oxide solid solution particle dispersion of step (B) for concentrating the dispersion.

The concentrating means may be any of existing means, for example, atmospheric concentration, vacuum concentration, azeotropic dehydration, ultrafiltration, reverse osmosis, and freeze drying. If the dispersion prior to concentration is at high temperature, there is a likelihood of evaporation to dryness. If the dispersion is at low temperature, there is a likelihood of freezing. In a dispersion of inorganic nanoparticles, a phase change is not always reversible, and a phase change and contact with solvent may rather cause to alter the dispersion. From this standpoint, a choice is preferably made among atmospheric concentration, vacuum concentration, and ultrafiltration. Inter alia, vacuum concentration under a pressure of up to 50 mmHg is preferred because of mild conditions.

In this step, the core/shell type tetragonal titanium oxide solid solution particle dispersion is preferably concentrated to a level of 5 to 20%, more preferably 8 to 17%, and even more preferably 10 to 15% by weight of core/shell type tetragonal titanium oxide solid solution particles (or solids). A concentration of less than 5 wt% indicates an extra content of water, undesirably leading to a compositional unbalance. If the concentration exceeds 20 wt%, undesirably the dispersion may become unstable and tends to gel with the lapse of time.

• Step (D)

Step (D) is to remove ammonia from the core/shell type tetragonal titanium oxide solid solution particle dispersion of step (C).

The ammonia removal means may be any of existing means, for example, ion exchange and adsorption. Preference is given to ammonia removal by a cation exchange resin.

There may be used any of commercially available cation exchange resins, for example, Amberlite IR120B, 200CT, IR124, FPC3500 and IRC76 marketed from Organo Co., Ltd. and Diaion SK104 and PK208 from Mitsubishi Chemical Corp.

After the cation exchange resin is used for ammonia removal, the resin is removed by filtration. Any filtration sufficient to achieve the purpose of separation between the ion exchange resin and the core/shell particle dispersion may be employed herein. In general, when considered as mechanical unit operation, filtration belongs to the classifying operation. However, the filtration used herein does not participate in classification of core/shell particles. Accordingly, a choice may be made of filters having a coarse mesh size allowing for efficient passage of the core/shell particle dispersion, for example, mesh sieves and qualitative filter papers.

In this step, ammonia is removed from the core/shell type tetragonal titanium oxide solid solution particle dispersion until the concentration of ammonia preferably reaches 0.1% by weight or lower, more preferably 0.05% by weight or lower, and even more preferably 0.01% by weight or lower. If the ammonia concentration exceeds 0.1 wt%, it may function as a condensation catalyst to silicone in the composition to a noticeable extent to eventually induce cracks in the silicone hard coat film.

Component (c-2)

Component (c-2) is a silicone resin obtained from (co)hydrolytic condensation of at least one member selected from among an alkoxysilane having the general formula (1):

$$(R^1)_m(R^2)_n Si(OR^3)_{4-m-n} \qquad (1)$$

wherein $R^1$ and $R^2$ are each independently hydrogen or a substituted or unsubstituted monovalent hydrocarbon group, $R^3$ is $C_1$-$C_3$ alkyl, m and n each are 0 or 1, m+n is 0, 1 or 2, and partial hydrolytic condensates thereof.

In formula (1), $R^1$ and $R^2$ are each independently selected from hydrogen and substituted or unsubstituted monovalent hydrocarbon groups, preferably having 1 to 12 carbon atoms, more preferably 1 to 8 carbon atoms, for example, hydrogen; alkyl groups such as methyl, ethyl, propyl, butyl, pentyl, hexyl, heptyl, and octyl; cycloalkyl groups such as cyclopentyl and cyclohexyl; alkenyl groups such as vinyl and allyl; aryl groups such as phenyl; halogenated hydrocarbon groups such as chloromethyl, γ-chloropropyl, and 3,3',3''-trifluoropropyl; (meth)acryloxy, epoxy, mercapto, or amino-substituted hydrocarbon groups such as γ-methacryloxypropyl, γ-glycidoxypropyl, 3,4-epoxycyclohexylethyl, γ-mercaptopropyl, and γ-aminopropyl. Of these, alkyl groups are preferred in the application where mar resistance and weather resistance are required, and epoxy or (meth)acryloxy-substituted hydrocarbon groups are preferred in the application where toughness and dyeability are required.

$R^3$ is a $C_1$-$C_3$ alkyl group such as methyl, ethyl, n-propyl or i-propyl. Of these, methyl and ethyl are preferred because hydrolytic condensation proceeds at a high reactivity and the resulting alcohol $R^3OH$ has a high vapor pressure and is easy to distill off.

The silicone resin as component (c-2) may be prepared through (co)hydrolytic condensation of at least one of alkoxysilanes having formula (1) and partial hydrolytic condensates thereof by a well-known method. For example, an alkoxysilane or partial hydrolytic condensate thereof alone or a mixture thereof is (co)hydrolyzed in water at pH 1 to 7.5, preferably pH 2 to 7. At this point, metal oxide nanoparticles dispersed in water such as silica sol may be used. A catalyst may be added to the system for adjusting its pH to the described range and to promote hydrolysis. Suitable catalysts include organic acids and inorganic acids such as hydrogen fluoride, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid, solid acid catalysts such as cation exchange resins having carboxylate or sulfonate groups on the surface, and water-dispersed metal oxide nanoparticles such as acidic water-dispersed silica sol. Alternatively, a dispersion of metal oxide nanoparticles in water or organic solvent such as silica sol may be co-present upon hydrolysis. It is acceptable to mix water, an acidic hydrolytic catalyst and alkoxysilane in the co-presence of component (c-1) before hydrolytic condensation reaction takes place. This process is advantageous because the dispersibility of component (c-1) is improved, despite a possibility of partial reaction between component (c-1) and component (c-2) and/or hydrolytic condensate of (c-2). Specifically, if component (c-1) is added during the reaction step of component (c-2), these results in component (c-1) being surface treated with the binder component itself, whereby dispersibility is improved. In the prior art technique for silicone coating of inorganic particles, the dispersed state of inorganic particles is temporarily stable, but becomes unstable during storage. This is because the silicone for coating and the silicone as binder are different in composition (or primary structure) and even when identical in composition, they are normally not identical in a strict sense with respect to secondary structure such as degree of condensation or polydispersity index. In contrast, if particles are surface treated with a binder resin itself, then the coating and binder resins are identical in secondary structure as well, leading to improvements in compatibility and dispersibility.

In this hydrolysis, water may be used in an amount of 20 to 3,000 parts by weight per 100 parts by weight of the total of alkoxysilanes and/or partial hydrolytic condensates thereof. An excess of water may lower system efficiency and in a final coating composition, residual water can adversely affect coating operation and drying.

Hydrolysis may be effected by adding dropwise or pouring water to the alkoxysilane or partial hydrolytic condensate, or inversely by adding dropwise or pouring the alkoxysilane or partial hydrolytic condensate to water. The reaction system may contain an organic solvent.

To produce the silicone resin (c-2), the hydrolysis must be followed by condensation. Condensation may be effected continuous to the hydrolysis while maintaining the liquid temperature at room temperature or heating at a temperature of not higher than 100°C. A temperature higher than 100°C may cause gelation. Condensation may be promoted by distilling off the alcohol formed by hydrolysis at a temperature of at least 80°C and atmospheric or subatmospheric pressure. Also for the purpose of promoting condensation, condensation catalysts such as basic compounds, acidic compounds or metal chelates may be added. Prior to or during the condensation step, an organic solvent may be added for the purpose of adjusting the progress of condensation or the concentration, or a dispersion of metal oxide nanoparticles in water or organic solvent such as silica sol or component (c-1) may also be added. For the reason that a silicone resin generally builds up its molecular weight and reduces its solubility in water or formed alcohol as condensation proceeds, the organic solvent added herein should preferably be one having a boiling point of at least 80°C and a relatively highly polarity in which the silicone resin is fully dissolvable. Examples of the organic solvent include alcohols such as isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as propyl acetate, butyl acetate, and cyclohexyl acetate. The organic solvent may be added in an amount sufficient to dissolve the silicone resin, typically 100 to 1,000% by weight based on the silicone resin solids. If the amount of the organic solvent added is less than 100 wt%, phase separation can occur during low-temperature storage, indicating poor quality. If the amount of the organic solvent added exceeds 1,000 wt%, the coating composition has so low a concentration of the resin or active ingredient that it is difficult to form a satisfactory coating.

When the silicone resin as component (c-2) is obtained from (co)hydrolytic condensation of the alkoxysilane having formula (1) and/or partial hydrolytic condensate thereof, the core/shell type tetragonal titanium oxide solid solution particle dispersion as component (c-1) may be added to the alkoxysilane and/or partial hydrolytic condensate thereof prior to (co)hydrolytic condensation. Where colloidal silica is used as component (c-5) as will be described later, this colloidal silica may also be added to the (co)hydrolytic condensation system.

Component (c-3)

Component (c-3) is a curing catalyst which serves to promote condensation reaction of condensable groups such as silanol and alkoxy groups in silicone resin (c-2). Suitable catalysts include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide, tetramethylammonium acetate, n-hexylamine, tributylamine, diazabicycloundecene (DBU), and dicyandiamide; metal-containing compounds such as tetraisopropyl titanate, tetrabutyl titanate, acetylacetonatotitanium, aluminum triisobutoxide, aluminum triisopropoxide, tris(acetylacetonate)aluminum, aluminum diisopropoxy(ethyl acetoacetate), aluminum perchlorate, aluminum chloride, cobalt octylate, (acetylacetonate)cobalt, (acetylacetonate)iron, (acetylacetonate)tin, dibutyltin octylate, and dibutyltin laurate; and acidic compounds such as p-toluenesulfonic acid and trichloroacetic acid. Of these, preference is given to sodium propionate, sodium acetate, sodium formate, trimethylbenzylammonium hydroxide, tetramethylammonium hydroxide, tris(acetylacetonate)aluminum, and aluminum diisopropoxy(ethyl acetoacetate).

Insofar as component (c-3) is compounded in an effective amount to cure the silicone resin (c-2), the amount of the catalyst is not particularly limited. Specifically the catalyst is preferably used in an amount of 0.0001 to 30% by weight, more preferably 0.001 to 10% by weight, based on the solids of the silicone resin. Less than 0.0001 wt% of the catalyst may lead to under-cure and low hardness. More than 30 wt% of the catalyst may lead to a coating which is prone to cracking and poorly water resistant.

Component (c-4)

Component (c-4) is a solvent. The solvent is not particularly limited as long as components (c-1) to (c-3) are dissolvable or dispersible therein. A solvent mainly comprising a highly polar organic solvent is preferred. Exemplary solvents include alcohols such as methanol, ethanol, isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as ethyl acetate, propyl acetate, butyl acetate, and cyclohexyl acetate. The solvents may be used alone or in admixture.

Component (c-4) is preferably added in such an amount that the silicone coating composition may have a solids concentration of 1 to 30% by weight, more preferably 5 to 25% by weight. Outside the range, a coating obtained by applying the composition and curing may be defective. For instance, a concentration below the range may lead to a coating which is likely to sag, wrinkle or mottle, failing to provide the desired hardness and mar resistance. A concentration beyond the range may lead to a coating which is prone to brushing, whitening or cracking.

Component (c-5)

Component (c-5) is colloidal silica. Particularly when it is desired to enhance the hardness and mar resistance of a coating, an appropriate amount of colloidal silica may be added. It is a colloidal dispersion of nanosized silica having a particle size of about 5 to 50 nm in a medium such as water or organic solvent. Commercially available water-dispersed or organic solvent-dispersed colloidal silica may be used herein. Examples include Snowtex-O, OS, OL and Methanol Silica Sol by Nissan Chemical Industries, Ltd. The colloidal silica may be compounded in an amount of 0 to 100 parts, preferably 5 to 100 parts, and more preferably 5 to 50 parts by weight per 100 parts by weight as solids of the silicone resin (c-2).

Other components

If desired, suitable additives may be added to the silicone hard coat composition insofar as they do not adversely affect the objects of the invention. Suitable additives include pH adjustors, leveling agents, thickeners, pigments, dyes, metal oxide nanoparticles, metal powder, antioxidants, UV absorbers, UV stabilizers, heat ray reflecting/absorbing agents, flexibilizers, antistatic agents, anti-staining agents, and water repellents.

The silicone hard coat composition may be obtained by mixing components (c-1) to (c-5) and optional components in a standard manner.

The silicone hard coat composition may be applied to the substrate by any ordinary coating techniques. Suitable coating techniques include brush coating, spray coating, dipping, flow coating, roll coating, curtain coating, spin coating, and knife coating.

After the silicone hard coat composition is applied, the coating may be air dried or heated to form a cured film. The curing temperature and time are not particularly limited although the coating is preferably heated at a temperature below the heat resistant temperature of the substrate for 10 minutes to 2 hours. More preferably the coating is heated at a temperature of 80 to 135°C for 30 minutes to 2 hours.

The hard coat layer (layer C) may have a thickness of 0.5 to 30 $\mu$m, preferably 1 to 25 $\mu$m, and more preferably 1.5 to 20 $\mu$m. With a thickness of less than 0.5 $\mu$m, no satisfactory mar resistance is available. With a thickness in excess of 30 $\mu$m, cracks may form or bend resistance be reduced.

(iv) Lamination of layers A and B

When the thermoplastic resin layer (layer B) is laid on the surface of the polycarbonate resin layer (layer A), a forming or molding technique may be used rather than a coating technique. In particular, lamination is preferably carried out by thermocompression bonding, insert molding and co-extrusion techniques, with the co-extrusion technique being most preferred. An illustrative example of the laminate preparation process is described below.

For the thermocompression bonding, any desired techniques may be used. For example, a technique of thermocompression bonding an acrylic resin film and a polycarbonate resin layer by means of a laminator or press machine, and a technique of thermocompression bonding an acrylic resin film to a polycarbonate resin layer immediately after extrusion are preferred, with the technique of continuously thermocompression bonding an acrylic resin film to a polycarbonate resin layer immediately after extrusion being industrially advantageous. The thermocompression bonding conditions are not definitely specified since they vary with the thickness of the polycarbonate resin layer and acrylic resin film, the state of bonding surfaces and the like. Thermocompression bonding is generally achievable by applying a temperature close to or higher than the glass transition temperature (Tg) of the acrylic resin film, typically a temperature from Tg-10°C to Tg+150°C, preferably from Tg-5°C to Tg+100°C and a linear pressure of at least 0.05 kg/cm, preferably 1 to 10 kg/cm.

For the insert molding, any desired techniques may be used. For example, there may be used a technique of inserting a thermoplastic resin film between male and female halves of an injection mold, and injecting a molten resin from one mold half side to form an injection molded part to which the film is simultaneously joined, and a technique of pre-shaping a thermoplastic resin into film by vacuum forming or air-pressure forming, inserting the thermoplastic resin film into an injection mold, and injecting a molten resin thereto for integral molding with the thermoplastic resin film. Such techniques are proposed, for example, in JP-A S59-031130, JP-A S62-196113, and JP-A H07-009484.

For the co-extrusion technique, the extruder used in the manufacture of laminates is generally constructed from a main extruder for extruding a polycarbonate resin to form a substrate layer and one or more sub-extruders for extruding a thermoplastic resin to form a coating layer(s), with the sub-extruder being typically of smaller size than the main extruder. The temperature of the sub-extruder is set appropriate depending on the type of thermoplastic resin. When the thermoplastic resin is an acrylic resin, the main extruder is set at a temperature of typically 230 to 290°C, preferably 240 to 280°C, and the sub-extruder is set at a temperature of typically 220 to 270°C, preferably 230 to 260°C. For the coating of two or more molten resins, well-known methods of feed block and multi-manifold modes may be used. More particularly, once the molten resins are laminated by the feed block, they are guided to a sheet-forming die such as T-die, where they are formed into a sheet form, which is fed to shaping or polishing rolls whose surface has been mirror finished, to form banks. The sheet-like shaped part is subjected to mirror finish and cooling during passage through the shaping rolls, whereby a laminate is formed. In the case of a multi-manifold die, the molten resins laminated in the die are similarly shaped into a sheet form within the die, after which surface finish and cooling are carried out on shaping rolls, whereby a laminate is formed. The die is set at a temperature of typically 220 to 280°C, preferably 230 to 270°C, and the shaping rolls are set at a temperature of typically 100 to 190°C, preferably 110 to 180°C. The rolls may be either vertical or horizontal.

The laminate of polycarbonate resin layer (layer A) and thermoplastic resin layer (layer B) obtained by the co-extrusion technique has a thickness of 0.5 mm to 20.0 mm, preferably 1.0 mm to 15.0 mm, and more preferably 1.5 mm to 10.0 mm. A laminate with a thickness equal to or more than the lower limit experiences less deflection by the external load and is preferred in outdoor application. A laminate with a thickness equal to or less than the upper limit does not interfere with wall thinning and weight reduction and allows for a view of the exterior without distortion.

(v) Other steps

Besides the above-described steps, the polycarbonate resin laminate of the invention may further comprise a printing layer. In the case of glazing, such a printing layer is formed on the periphery of the laminate and has a function to screen or conceal an adhesive or structural member formed on the periphery. In building material and other applications, the printing layer has a function of design or decoration. The printing layer may be formed on one surface or both surfaces of layer A or B. When the printing layer is formed by ink coating, the forming technique may be selected from a variety of techniques including printing, spray coating and brush coating. The printing technique is not particularly limited, and any prior art well-known techniques may be used to print on a planar or curved sheet surface. Exemplary techniques include spray printing, offset printing, flexographic printing, gravure printing, screen printing and inkjet printing. Inter alia, the screen printing technique is most preferably applicable.

Besides the above-described steps, the polycarbonate resin laminate of the invention may be further subjected to steps of trimming, punching and attachment of a peripheral member before a final part or product as resin glazing is completed. Exemplary peripheral members include frames, pins, screws, fasteners, buffers, seals, hinges, lock mechanisms and the like. Such a peripheral member is attached using a securing means such as adhesion, sticking, screwing, fusion bonding, fitting, engagement, ultrasonic welding, and laser welding.

(vi) Mount to structural member

The polycarbonate resin laminate of the invention may be mounted to a final product, typically vehicle body using various securing means, as used in the attachment of the peripheral member. In the case of glazing, the securing means most preferred for mounting is adhesion. For the adhesion purpose, any of rigid adhesives, semi-rigid adhesives, and elastomeric adhesives may be utilized. In the practice of the invention, the elastomeric adhesives are preferred since they are better structural adhesives, with urethane based elastomeric adhesives being especially preferred from the aspects of sealing performance, strength and cost. Such an adhesive layer may be formed on any of the polycarbonate resin layer, UV absorptive thermoplastic resin layer, printing layer, and hard coat layer. Alternatively, any layer once laminated may be removed by any suitable means of chemical treatment, blasting, polishing and grinding before the adhesive layer is formed. By avoiding printing through an embedded printing plate in the case of printing layer formation, or by mainly applying masking in the case of hard coat layer formation, it becomes possible that the surface layer at the site where the adhesive layer is to be formed be the predetermined layer.

When the urethane based elastomeric adhesive is applied as the preferred securing means, preferably coating of an adhesive primer precedes coating of the urethane adhesive in order to improve adhesion. The primer for the urethane adhesive preferably contains a polyisocyanate compound as a main component when applied onto the substrate layer and printing layer, and usually, those primers referred to as "body primer" or "coating primer" in the market may preferably be utilized. The primer preferably contains a polyisocyanate compound and a silane compound as a main component when applied onto the hard coat layer, and usually, those primers referred to as "glass primer" may preferably be utilized.

In addition to the main component having reactivity, the primer for the urethane adhesive is generally composed of a solvent, filler, catalyst, dryer, resin component, and optional other compounds.

In the primer to be applied onto the resin substrate layer or printing ink layer, the polyisocyanate compound is preferably based on polyisocyanate containing an aromatic ring because such a polyisocyanate compound is highly reactive. More preferably, at least one polyisocyanate compound selected from the group consisting of MDI, TDI, triphenylmethane-4,4,4-triisocyanate, and tris(p-isocyanatophenyl)thiophosphate accounts for at least 50 mol%, even more preferably 55 to 90 mol% based on the polyisocyanate compound (100 mol%) in the adhesive primer. Other polyisocyanate compounds which can be used herein include aliphatic polyisocyanate compounds and alicyclic polyisocyanate compounds. Suitable compounds include isocyanurate-modified forms of TDI and HDI, adduct-modified forms of HDI and trimethylol propane, isocyanurate-modified forms of HDI, and isocyanurate-modified forms of IPDI, and inter alia, isocyanurate-modified forms of TDI and HDI are preferred for easy adjustment of reactivity. The primer to be applied onto the resin substrate layer or printing ink layer is preferably a combination of MDI, tris(p-isocyanatophenyl)thiophosphate, and an isocyanurate-modified form of TDI and HDI, especially such a combination containing 50 to 70 mol% of tris(p-isocyanatophenyl)thiophosphate relative to the total 100 mol% of the three components.

In the primer to be applied onto the hard coat layer, preferably a silane coupling agent and the reaction product of a silane compound and a polyisocyanate compound are used as main components. The silane coupling agent which can be used herein may be any of prior art well-known agents, and especially, a combination of an epoxy-containing silane coupling agent such as $\gamma$-glycidoxypropyltrimethoxysilane with an amino-containing silane coupling agent such as N-($\beta$-aminoethyl)-$\gamma$-aminopropylmethyldimethoxysilane is preferred. It is also preferable to use a vinyl-containing silane coupling agent such as vinyltrimethoxysilane, if necessary. As the reaction product of a silane compound and a polyisocyanate compound, the reaction products of polyisocyanate compounds as mentioned above with mercapto-containing alkoxysilane compounds such as $\gamma$-mercaptopropyltrimethoxysilane may be used. Suitable polyisocyanate compounds include aliphatic polyisocyanate compounds as typified by HDI, alicyclic polyisocyanate compounds as typified by IPDI, and adduct-, isocyanurate- and biuret-modified forms thereof.

The adhesive primer layer is formed by coating the primer composition by means of various applicators, and drying typically at normal temperature. As the coating technique, any of brush coating, spray coating, wire bar coating, blade coating, and roll coating techniques may be used. The adhesive primer layer preferably has a thickness of 2 to 40 $\mu$m, more preferably 3 to 30 $\mu$m, and even more preferably 5 to 20 $\mu$m.

As the urethane adhesive used herein, any of moisture cure type one-part urethane adhesives and two-part urethane adhesives may be used, with the moisture cure type one-part urethane adhesives being preferred for high production efficiency. The moisture cure type one-part urethane adhesive generally contains an isocyanate-containing compound, especially isocyanate-terminated urethane prepolymer (NCO-terminated prepolymer) as a main component, with which a plasticizer, filler, catalyst and optionally, other compounds are blended. The other compounds are added for the purpose of imparting desired properties to the composition and include a bonding agent such as a polyisocyanate compound or silane coupling agent (e.g., $\gamma$-mercaptopropyltrimethoxysilane), a (meth)acrylate copolymer for imparting heat resistant adhesion, an expanding agent or microballoons for imparting light weight, vibration damping and noise barrier. The content of the prepolymer is preferably 15 to 50% by weight, more preferably 20 to 45% by weight, and even more preferably 30 to 45% by weight based on the total weight of the urethane adhesive composition. Typical examples of the urethane adhesive composition are adhesives for direct glazing such as WS-222 from Yokohama Rubber Co., Ltd. and #560 from Sunstar Engineering Inc.

The thickness of the urethane adhesive layer used herein is preferably determined in accordance with the plastics/steel region of Figure 27 in Adhesives and Sealants: General Knowledge, Application Techniques, New Curing Techniques (Elsevier Science Ltd., 2006), p. 385. Notably, since the region in the diagram is set on a relatively safe side, it is possible that the thickness of the urethane adhesive is reduced in a range of less than 2 mm, preferably less than 1.5 mm from the line delineating the region, while the shape and service conditions are taken into account. Particularly when the molded part has a longer side of less than 1 meter, the thickness can be designed on a line to which a line: $\Delta\alpha = 12\times10^{-6}$K is extrapolated.

In the case of building material application, bend working is applied as the most effective means of attachment. More particularly, when the shape of a frame of a final product is different from the shape of the polycarbonate resin laminate, curvature working at normal temperature is applied as the most effective means of attachment. A greater allowance for bending of the polycarbonate resin laminate is preferable because the laminate can comply with the final product of complex shape. The allowance for bending of the laminate is such that in a three-point flexural test according to JIS K7171, the laminate cracks at a radius of curvature R of up to 100, more preferably up to 90 and even more preferably up to 80. The lower its lower limit, the better are results. The lower limit is typically at least 50, though not critical.

Also, when the critical stress test is performed, the critical stress after holding at 80°C for 114 hours is preferably at least 18 Mpa, more preferably at least 20 Mpa, and even more preferably at least 22 Mpa; the critical stress after holding at 110°C for 21 hours is preferably at least 9 Mpa, more preferably at least 10 Mpa, and even more preferably at least 11 Mpa. The greater its upper limit, the better are results. The upper limit is typically up to 54 MPa, though not critical.

As described above, if the polycarbonate resin laminate is forcedly bend-workable at normal temperature in conformity with the shape of the final product frame, then the freedom of design of an outdoor structure inclusive of roof and especially the roof can be maintained as high as possible. Thus the polycarbonate resin laminate is advantageously applicable to outdoor structures and useful for general purposes.

EXAMPLES

Examples and Comparative Examples are given below for illustrating the invention. The invention is not limited thereto as long as it is within the scope and spirit of the invention. In Examples and Comparative Examples, physical properties were evaluated by the following methods.

(I) Evaluation items

<Transparency>

The resin laminate obtained in Example was evaluated for overall light transmittance (Tt) and haze (Hz) according to JIS K7361-1 and JIS K7136, respectively.

<Mar resistance>

The laminate was evaluated according to ASTM D1044 by mounting a Taber abrasion tester with wheels CS-10F, measuring a haze (Hz) after 500 cycles under a load of 500 g by a haze meter NDH2000 (Nippon Denshoku Industries Co., Ltd.), and calculating a haze difference ($\Delta$Hz) before and after the abrasion test.

<Adhesion of hard coat layer>

The adhesion was analyzed by scribing the hard coat layer with a cutter along 11 longitudinal and 11 transverse lines at a spacing of 1 mm to define 100 square sections, tightly attaching pressure-sensitive adhesive tape (Cellotape® by Nichiban Co., Ltd.) thereto, rapidly pulling back the adhesive tape at an angle of 90°, and counting the number of hard coat sections kept unpeeled.

<Adhesion after boiling water test>

The sample was immersed in boiling water for 3 hours, after which it was visually observed for outer appearance and examined by the same adhesion test as above for initial adhesion.

<Weathering test>

The sample was exposed for 1,000 hours and 6,000 hours in the super-xenon test (UV irradiation intensity 180 W/m$^2$, black panel temperature 63°C), before it was taken out and evaluated for yellowness index (YI), crack, adhesion, and outer appearance.

<Yellowness index>

Yellowness index was measured according to JIS Z8722 by means of integrating-sphere spectrophotometer CE-7000A (X-Rite). A yellowness index difference (ΔYI) before and after the weathering test was determined.

<Weathering crack resistance>

The outer appearance (whether or not cracked) of the sample after the weathering test was evaluated according to the following criterion.

○:    intact

Δ:    some cracks

×:    cracks overall the coating

<Weathering adhesion>

After the weathering test, the same adhesion test as above for initial adhesion was carried out.

<Weathering peel>

The outer appearance (whether or not peeled) of the sample after the weathering test was evaluated according to the following criterion.

○:    intact
Δ:    partial peel
×:    peel overall the surface

<Evaluation of bend working>

The three-point flexural test according to JIS K7171 was carried out to determine a radius of curvature (R) on cracking. The radius of curvature was calculated according to the following equation:

$$R = (a^2+50^2)/(2a) \tag{2}$$

wherein "a" is a distance (mm) over which the sample was forced by the three-point bending jig.

<Evaluation of critical stress>

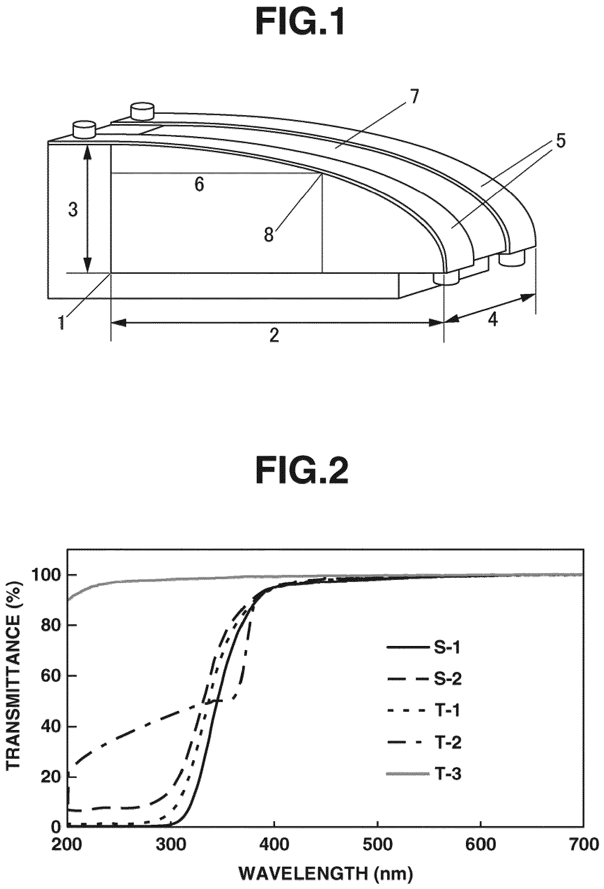

According to the quarter elliptic method developed by Bell Telephone, a sample having a thickness 1.0 mm, a width 40.0 mm and a length 120.0 mm as shown in FIG. 1 was set in the quarter ellipse jig and held at 23°C for 24 hours. From the length at the point of cracking and the thickness of the sample, critical distortion and critical stress were determined. The distortion at the point of cracking is determined by the following equation (3). In FIG. 1, 1 stands for a center of ellipse, 2 for a long axis radius of ellipse (= 10 cm), 3 for a short axis radius of ellipse (= 4 cm), 4 for a jig width (= 4 cm), 5 for metal holders (each 1 cm wide), 6 for a horizontal distance (mm) from the ellipse center to the site of cracking with least distortion, 7 for the sample (polycarbonate resin laminate), and 8 for the site of cracking with least distortion.

$$\varepsilon = [0.02(1-0.0084X^2)^{-3/2}]t \qquad (3)$$

Herein $\varepsilon$ is a distortion (%), t is a sample thickness (cm), and X is a horizontal distance (mm) from the ellipse center to the critical point of cracking in X-coordinate axis direction.

<Heat resistance test after evaluation of critical stress>

According to the quarter elliptic method developed by Bell Telephone, a sample having a thickness 1.0 mm, a width 40.0 mm and a length 120.0 mm was set in the quarter ellipse jig. Critical distortion was determined both after the lapse of 114 hours in a heat resistance dryer at 80°C and after the lapse of 21 hours in a heat resistance dryer at 110°C. Distortion at the point of cracking and critical stress are determined by the following equation (distortion at the point of cracking by the above equation (3)):

$$\text{Critical stress} = \varepsilon E \ (MPa) \qquad (4)$$

wherein E is a PC flexural modulus (2000).

<UV shielding>

A silicone hard coat composition was flow coated on one surface (length 40 mm × width 10 mm) of a quartz plate (by Fujiwara Mfg. Co., Ltd., length 40 mm × width 10 mm × thickness 1 mm) such that the cured coating might have a thickness of 4 $\mu$m, and allowed to stand. After 15 minutes of standing, the coating was heated at 120°C for 1 hour for curing. The cured film-bearing quartz plate was measured for transmittance by a UV/Vis spectrophotometer (Shimadzu Corp.).

(II) Preparation of polycarbonate resin A1 used to form polycarbonate resin layer (layer A)

There were furnished polycarbonate resin pellets (Teijin Ltd., Panlite L-1250WP) obtained from interfacial polymerization of bisphenol A with phosgene by the standard technique and having a viscosity average molecular weight of 23,900.

(III) Preparation of thermoplastic resin used to form thermoplastic resin layer (layer B)

(III-1) Preparation of acrylic resins B1, B3, B5

There was furnished a commercially available acrylic resin (Mitsubishi Rayon Co., Ltd., polymethyl methacrylate resin VH001).
By extruding the resin through a T-shaped die set at a temperature of 230°C, an acrylic resin film (B5) of 100 $\mu$m thick was obtained.

(III-2) Preparation of acrylic resin B2

A resin blend was obtained by blending a commercially available acrylic resin (Mitsubishi Rayon Co., Ltd., polymethyl methacrylate resin VH001) and a commercially available (meth)acrylic rubber component (Mitsubishi Rayon Co., Ltd., polymethyl methacrylate resin IRG304) in a VH001/IRG304 ratio of 100/18.

EP 2 979 862 B1

(III-3) Preparation of acrylic resin B4

A flask equipped with a reflux condenser and stirrer was purged with nitrogen, in which 74.2 parts by weight of ethyl methacrylate (abbreviated as EMA), 33.6 parts by weight of cyclohexyl methacrylate (abbreviated as CHMA), 13.0 parts by weight of 2-hydroxyethyl methacrylate (abbreviated as HEMA), 12.0 parts by weight of LA-82 (hindered amine base photostable group-bearing methacrylate by ADEKA Corp., 1,2,2,6,6-pentamethyl-4-piperidyl methacrylate), 132.8 parts by weight of methyl isobutyl ketone (abbreviated as MIBK), and 66.4 parts by weight of 2-butanol (abbreviated as 2-BuOH) were admitted and mixed. The mixture was deoxygenated by blowing nitrogen gas for 15 minutes, heated in a nitrogen gas stream at 70°C, combined with 0.33 part by weight of azobisisobutyronitrile (abbreviated as AIBN), and stirred in a nitrogen gas stream at 70°C for 5 hours for reaction. Further, 0.08 part by weight of AIBN was added to the reaction mixture, which was heated at 80°C for 3 hours for reaction, obtaining an acrylic copolymer solution having a nonvolatile concentration of 39.7% by weight. The acrylic copolymer had a weight average molecular weight of 115,000 as measured versus polystyrene standards by GPC (column: Shodex GPCA-804, eluent: THF). To 100 parts by weight of the acrylic copolymer solution, 68.6 parts by weight of MIBK, 34.2 parts by weight of 2-BuOH, and 133 parts by weight of 1-methoxy-2-propanol (abbreviated as PMA) were added and mixed, and 4.24 parts by weight of Tinuvin 400 (Ciba Specialty Chemicals Inc., triazine UV absorber), 1.06 parts by weight of parts by weight of Tinuvin 479 (Ciba Specialty Chemicals Inc., triazine UV absorber), and 10.1 parts by weight of VESTANAT B13358/100 (Degussa, blocked polyisocyanate compound) to provide 1.0 equivalent of isocyanate group per equivalent of hydroxyl group on the acrylic copolymer in the acrylic copolymer solution were added. Further, 0.015 part by weight of dimethyltin dineodecanoate was added to the solution, which was stirred at 25°C for 1 hour, obtaining an acrylic resin coating composition (B4: acrylic resin coating composition).

(IV) Preparation of formed sheet

(IV-1) Preparation of monolayer sheet

Using polycarbonate resin A1, a polycarbonate resin sheet (Teijin Ltd., Panlite sheet PC-1151) having a viscosity average molecular weight of 23,900 was obtained. It is noted that evaluation of critical stress was performed at a thickness of 1.0 mm and evaluation of other parameters was performed at a thickness of 3.5 mm.

(IV-2) Preparation of coextruded sheet

Polycarbonate resin A1 to form the polycarbonate resin layer which was melted in a single-screw extruder having a screw diameter of 40 mm and acrylic resin B to form the thermoplastic resin layer which was melted in a single-screw extruder having a screw diameter of 30 mm, were laminated as two layers by the feed block technique, and extruded through a T-shaped die set at a temperature of 280°C. The resulting sheet was cooled between mirror-finished rolls, obtaining a resin laminate in which a polycarbonate resin sheet (Teijin Ltd., Panlite L-1250WP, viscosity average molecular weight 23,900) was overlaid on one surface with an acrylic resin layer comprising 100 parts by weight of commercially available acrylic resin (Table 1) and 2.0 parts by weight of benzotriazole type UV absorber (Adekastab LA-31 by Adeka Corp.). It is noted that evaluation of critical stress was performed at a thickness of 1.0 mm and evaluation of other parameters was performed at a thickness of 3.5 mm. The type and thickness of the acrylic resin layer are as shown in Table 1.

[Table 1]

|  | B-1 | B-2 | B-3 | B-4 | B-5 |
|---|---|---|---|---|---|
| Layer B | VH001 | VH001/ IRG304 | VH001 | acrylic resin coating composition | VH001 |
| Thickness of layer B ($\mu$m) | 100 | 100 | 60 | 8 | 100 |

(V) Preparation of coating composition used to form hard coat layer

(V-1) Preparation of silicone resin based hard coat composition (S1) containing core/shell type titanium oxide solid solution particles having tin and manganese incorporated in solid solution (6 mol% tin and 2 mol% manganese relative to 100 mol% titanium)

To 66 parts by weight of 36 wt% titanium(IV) chloride aqueous solution (TC-36 by Ishihara Sangyo Kaisha, Ltd.) were added 2.6 parts by weight of tin(IV) chloride pentahydrate (Wako) and 0.5 part by weight of manganese(II) chloride tetrahydrate (Wako). They were thoroughly mixed and diluted with 1,000 parts by weight of ion exchanged water. To the metal salt aqueous solution mixture, 300 parts by weight of 5 wt% aqueous ammonia (Wako) was gradually added for neutralization and hydrolysis, yielding a precipitate of titanium hydroxide containing tin and manganese. This titanium hydroxide slurry was at pH 8. The precipitate of titanium hydroxide was deionized by repeating ion exchanged water addition and decantation. To the precipitate of titanium hydroxide containing tin and manganese after deionization, 100 parts by weight of 30 wt% aqueous hydrogen peroxide (Wako) was gradually added, whereupon stirring was continued at 60°C for 3 hours for full reaction. Thereafter, pure water was added for concentration adjustment, yielding a brown clear solution of tin and manganese-containing peroxotitanate (solid concentration 1 wt%). An autoclave of 500 mL volume (TEM-D500 by Taiatsu Techno Co., Ltd.) was charged with 350 mL of the peroxotitanate solution synthesized as above, which was subjected to hydrothermal reaction at 200°C and 1.5 MPa for 240 minutes. The reaction mixture in the autoclave was taken out via a sampling tube to a vessel in water bath at 25°C whereby the mixture was rapidly cooled to quench the reaction, obtaining a titanium oxide dispersion (i). When an average particle size was measured by Nanotrac UPA-EX150 (Nikkiso Co., Ltd.) based on the dynamic scattering method using laser light, as the 50% cumulative particle size distribution diameter on volume basis ($D_{50}$), this titanium oxide dispersion (i) had an average particle size of 14 nm.

Next, a separable flask equipped with a magnetic stirrer and thermometer was charged with 100 parts by weight of titanium oxide dispersion (i), 10 parts by weight of ethanol, and 0.2 part by weight of ammonia at room temperature, followed by magnetic stirring. The separable flask was placed in an ice bath and cooled until the temperature of the contents reached 5°C. Tetraethoxysilane, 1.8 parts by weight, was added to the separable flask, which was mounted in μReactor EX (Shikoku Instrumentation Co., Inc.) where microwave was applied at a frequency 2.45 GHz and a power 1,000 W for 1 minute while magnetic stirring was continued. The thermometer was monitored during the microwave heating step, confirming that the temperature of the contents reached 85°C. After heating, the reactor was cooled to room temperature in a water bath. The liquid was poured into a round bottom flask and concentrated by batchwise vacuum distillation. After concentration, the liquid was kept in contact with 10 parts by weight of Amberlite 200CT (Organo Co., Ltd.) for 3 hours. The mixture was filtered by filter paper (Advantec 2B) to remove the ion exchange resin. The filtrate was a core/shell type titanium oxide solid-solution particle water dispersion (CS-i). A given amount of the dispersion (CS-i) was weighed by a precision balance (AUX-220 by Shimadzu Corp.) and treated in an oven (Perfect Oven by Espec Corp.) at 105°C for 3 hours for volatilizing the dispersing solvent. It was then confirmed that the dispersion had a solid concentration of 15 wt%. After the dispersion (CS-i) was diluted to a solid concentration of 1 wt%, the average particle size ($D_{50}$) was measured as in the case of titanium oxide dispersion (i), finding a size $D_{50}$ of 22.3 nm. Also after the dispersion (CS-i) was diluted to a solid concentration of 1 wt%, UV/visible transmission spectrum was measured to find a transmittance of 90% at 550 nm, indicating the maintenance of satisfactory transparency. Further, the test was performed by adding methylene blue (Wako, special grade) to a 0.5 wt% core/shell type titanium oxide solid-solution particle water dispersion in a concentration of 0.01 mmol/L, filling a borosilicate glass vial with the dispersion, irradiating black light (UV irradiation intensity 0.5 mW/cm$^2$, as measured by EYE UV illuminometer UVP365-1 of Iwasaki Electric Co., Ltd.) for 24 hours, and colorimetric analysis at 653 nm. A percent decline of absorbance was 5%.

Next, a 2-L flask was charged with 136 parts by weight of methyltrimethoxysilane and cooled such that the liquid was at a temperature of about 10°C. A mixture of 100 parts by weight of Snowtex O (Nissan Chemical Industries, Ltd., water dispersed silica sol, average particle size 15-20 nm, $SiO_2$ content 20 wt%) and 44.2 parts by weight of core/shell type titanium oxide solid-solution particle dispersion (CS-i) was added to the flask. As the mixture was added, exothermic heat due to hydrolysis was observed, and the internal temperature rose to 50°C. At the end of addition, the contents were stirred at 60°C for 3 hours to drive hydrolysis to completion. Thereafter, 142 parts by weight of cyclohexanone was admitted to the flask, which was heated up to a liquid temperature of 92°C under atmospheric pressure for distilling off methanol formed by hydrolysis and for effecting condensation. To the flask were added 189.3 parts by weight of isobutanol as diluent, 0.1 part by weight of KP-341 (Shin-Etsu Chemical Co., Ltd.) as leveling agent, 1.6 parts by weight of acetic acid as pH adjustor, and 2.5 parts by weight of 10 wt% tetrabutylammonium hydroxide aqueous solution (Wako, special grade). Subsequent stirring at room temperature and filtration through filter paper yielded a silicone resin based hard coat composition (S1) having a nonvolatile concentration of 20.9 wt%.

(V-2) Preparation of silicone resin based hard coat composition (S2) containing core/shell type titanium oxide solid-solution particles having cobalt incorporated in solid solution (4 mol% cobalt relative to 100 mol% titanium)

A 2-L flask was charged with 136 parts by weight of methyltrimethoxysilane and cooled such that the liquid was at a temperature of about 10°C. A mixture of 100 parts by weight of Snowtex O (Nissan Chemical Industries, Ltd., water dispersed silica sol, average particle size 15-20 nm, $SiO_2$ content 20 wt%) and 44.2 parts by weight of 0.25N acetic acid solution was added dropwise to carry out hydrolysis while the flask was cooled so that the internal temperature might not exceed 40°C. At the end of addition, the contents were stirred below 40°C for 1 hour and at 60°C for 3 hours to drive hydrolysis to completion. Thereafter, 142 parts by weight of cyclohexanone was admitted to the flask, which was heated up to a liquid temperature of 92°C under atmospheric pressure for distilling off methanol formed by hydrolysis and for effecting condensation. To the flask were added 189.3 parts by weight of isobutanol as diluent, 0.1 part by weight of KP-341 (Shin-Etsu Chemical Co., Ltd.) as leveling agent, 6.5 parts by weight of acetic acid as pH adjustor, and 1.8 parts by weight of 20 wt% tetramethylammonium hydroxide aqueous solution (Wako, special grade) as curing catalyst. The contents were stirred at room temperature. There was further added 65.4 parts by weight of RTTDNB 15 wt%-E88 (CIK Nanotek Co., Ltd., a dispersion of core/shell type titanium oxide solid-solution particles, with a solid concentration of 15 wt%, obtained by forming titanium oxide nanoparticles having cobalt atom incorporated in solid solution (4 mol% cobalt relative to 100 mol% titanium) by DC arc plasma technique, coating the nanoparticles with an alumina/zirconia-containing coating, surface treating with methyltrimethoxysilane, and dispersing in an alcohol mixture with the aid of a polymeric dispersant). Subsequent stirring and filtration through filter paper yielded a silicone resin based hard coat composition (S2) having a nonvolatile concentration of 19.2 wt%.

The titanium oxide dispersion (RTTDNB 15 wt%-E88) prior to the step of surface coating with silicon oxide and the core/shell type titanium oxide dispersion were measured for an average particle size ($D_{50}$) by the same method as used for (V-1), finding a size of 40.0 nm and 82.0 nm, respectively. Also, after RTTDNB 15 wt%-E88 was diluted with methanol to a solid concentration of 1 wt%, UV/visible transmission spectrum was measured to find a transmittance of 90% at 550 nm, indicating the maintenance of satisfactory transparency. Further, the test was performed by adding methylene blue (Wako, special grade) to the dispersion diluted with methanol to a solid concentration of 0.5 wt% in a concentration of 0.01 mmol/L, filling a borosilicate glass vial with the dispersion, irradiating black light (UV irradiation intensity 0.5 mW/cm$^2$, as measured by EYE UV illuminometer UVP365-1 of Iwasaki Electric Co., Ltd.) for 24 hours, and colorimetric analysis at 653 nm. A percent decline of absorbance was 8%.

(V-3) Preparation of silicone resin based hard coat composition (T1) containing core/shell type titanium oxide particles having no other atom incorporated in solid solution (100 mol% titanium)

The same procedure as in (V-1) was repeated except that tin(IV) chloride pentahydrate and manganese(II) chloride tetrahydrate were omitted. There was obtained a water dispersion (CS-ii) of core/shell type titanium oxide particles having no other atom incorporated in solid solution. A given amount of the dispersion (CS-ii) was weighed by a precision balance (AUX-220 by Shimadzu Corp.) and treated in an oven (Perfect Oven by Espec Corp.) at 105°C for 3 hours for volatilizing the dispersing solvent. It was then confirmed that the dispersion had a solid concentration of 15 wt%.

The titanium oxide dispersion (ii) prior to the step of surface coating with silicon oxide and the core/shell type titanium oxide dispersion (CS-ii) were measured for an average particle size ($D_{50}$) by the same method as used for (V-1), finding a size of 20 nm and 34.6 nm, respectively. Also, after the dispersion (CS-ii) was diluted to a solid concentration of 1 wt%, UV/visible transmission spectrum was measured to find a transmittance of 90% at 550 nm, indicating the maintenance of satisfactory transparency. Further, the test was performed by adding methylene blue (Wako, special grade) to the 0.5 wt% core/shell type titanium oxide particle water dispersion in a concentration of 0.01 mmol/L, filling a borosilicate glass vial with the dispersion, irradiating black light (UV irradiation intensity 0.5 mW/cm$^2$, as measured by EYE UV illuminometer UVP365-1 of Iwasaki Electric Co., Ltd.) for 24 hours, and colorimetric analysis at 653 nm. A percent decline of absorbance was 44%.

A 2-L flask was charged with 136 parts by weight of methyltrimethoxysilane and cooled such that the liquid was at a temperature of about 10°C. A mixture of 100 parts by weight of Snowtex O (Nissan Chemical Industries, Ltd., water dispersed silica sol, average particle size 15-20 nm, SiO$_2$ content 20 wt%) and 44.2 parts by weight of core/shell type titanium oxide dispersion (CS-ii) was added. As the mixture was added, exothermic heat due to hydrolysis was observed, and the internal temperature rose to 50°C. At the end of addition, the contents were stirred at 60°C for 3 hours to drive hydrolysis to completion. Thereafter, 142 parts by weight of cyclohexanone was admitted to the flask, which was heated up to a liquid temperature of 92°C under atmospheric pressure for distilling off methanol formed by hydrolysis and for effecting condensation. To the flask were added 189.3 parts by weight of isobutanol as diluent, 0.1 part by weight of KP-341 (Shin-Etsu Chemical Co., Ltd.) as leveling agent, 1.6 parts by weight of acetic acid as pH adjustor, and 2.5 parts by weight of 10 wt% tetrabutylammonium hydroxide aqueous solution (Wako, special grade). Subsequent stirring at room temperature and filtration through filter paper yielded a silicone resin based hard coat composition (T1) having a nonvolatile concentration of 20.2 wt%.

(V-4) Preparation of silicone resin based hard coat composition (T2) containing core/shell type zinc oxide particles (100 mol% zinc)

A silicone resin based hard coat composition (T2) having a nonvolatile concentration of 19.8 wt% was prepared by the same procedure as used for (V-2) aside from using ZNTAB 15 wt%-E16(2) (CIK Nanotek Co., Ltd., a dispersion, with a solid concentration of 15 wt%, obtained by forming zinc oxide nanoparticles by DC arc plasma technique, coating the nanoparticles with silica, surface treating with methyltrimethoxysilane, and dispersing in an alcohol mixture with the aid of a polymeric dispersant) instead of RTTDNB 15 wt%-E88 in (V-2).

It is noted that ZNTAB 15 wt%-E16(2) had an average particle size ($D_{50}$) of 45.0 nm and 105.0 nm, respectively, and a percent decline of methylene blue colorimetric absorbance was 24%, as measured by the same methods as used for (V-1).

(V-5) Preparation of silicone resin based hard coat composition (T3)

A 2-L flask was charged with 136 parts by weight of methyltrimethoxysilane and cooled such that the liquid was at a temperature of about 10°C. A mixture of 100 parts by weight of Snowtex O (Nissan Chemical Industries, Ltd., water dispersed silica sol, average particle size 15-20 nm, $SiO_2$ content 20 wt%) and 44.2 parts by weight of 0.25N acetic acid aqueous solution was added to the flask. As the mixture was added, exothermic heat due to hydrolysis was observed, and the internal temperature rose to 50°C. At the end of addition, the contents were stirred at 60°C for 3 hours to drive hydrolysis to completion. Thereafter, 142 parts by weight of cyclohexanone was admitted to the flask, which was heated up to a liquid temperature of 92°C under atmospheric pressure for distilling off methanol formed by hydrolysis and for effecting condensation. To the flask were added 189.3 parts by weight of isobutanol as diluent, 0.1 part by weight of KP-341 (Shin-Etsu Chemical Co., Ltd.) as leveling agent, 1.6 parts by weight of acetic acid as pH adjustor, and 1.8 parts by weight of 20 wt% tetramethylammonium hydroxide aqueous solution (Wako, special grade) as curing catalyst. Subsequent stirring at room temperature and filtration through filter paper yielded a silicone resin based hard coat composition (T3) having a nonvolatile concentration of 19.4 wt%.

(V-6) Preparation of UV-curable acrylate hard coat composition (T4)

A UV-curable acrylate hard coat composition (T4) was prepared by mixing 100 parts by weight of multifunctional acrylate oligomer (U-15HA by Sin-Nakamura Chemical Co., Ltd.), 5 parts by weight of phenyl-1-hydroxycyclohexyl ketone (Irgacure 184 by BASF), 250 parts by weight of 1-methoxy-2-propanol, 100 parts by weight of 2-propanol, and 29.2 parts by weight of organic solvent dispersion of colloidal silica (Snowtex O-40 by Nissan Chemical Industries Ltd., solid concentration 40 wt%).

The content of colloidal silica and/or alkoxysilane hydrolytic condensate was 30 wt%.

(V-7) Preparation of melamine resin hard coat composition (T5)

A melamine resin hard coat composition (T5) was prepared by mixing 100 parts by weight of methylated methylol melamine (Cymel 301 by Japan Cytec Industries Co., Ltd.), 70 parts by weight of 1,6-hexanediol, 5 parts by weight of maleic acid, 150 parts by weight of isopropyl alcohol, 320 parts by weight of isobutyl alcohol, and 25 parts by weight of ethylene glycol monobutyl ether.

The content of colloidal silica and/or alkoxysilane hydrolytic condensate was 0 wt%.

[Example 1]

A PC resin laminate was prepared by coating the coextruded substrate fabricated from (A1) and (B1) in (II) and (III) on its layer B with hard coat composition (S1) in (V) by the flow coating technique such that the coating might have a thickness of 4.0 μm after heat curing, statically holding the coating at 25°C for 15 minutes, and heat curing at 120°C for 1 hour. The results are shown in Table 2.

[Example 2]

A PC resin laminate was prepared by coating the coextruded substrate fabricated from (A1) and (B1) in (II) and (III) on its layer B with hard coat composition (S2) in (V) by the flow coating technique such that the coating might have a thickness of 4.0 μm after heat curing, statically holding the coating at 25°C for 15 minutes, and heat curing at 120°C for 1 hour. The results are shown in Table 2.

[Example 3]

A PC resin laminate was prepared by coating the coextruded substrate fabricated from (A1) and (B2) in (II) and (III) on its layer B with hard coat composition (S1) in (V) by the flow coating technique such that the coating might have a thickness of 4.0 μm after heat curing, statically holding the coating at 25°C for 15 minutes, and heat curing at 120°C for 1 hour. The results are shown in Table 2.

[Example 4]

A PC resin laminate was prepared by coating the coextruded substrate fabricated from (A1) and (B3) in (II) and (III) on its layer B with hard coat composition (S1) in (V) by the flow coating technique such that the coating might have a thickness of 4.0 $\mu$m after heat curing, statically holding the coating at 25°C for 15 minutes, and heat curing at 120°C for 1 hour. The results are shown in Table 2.

[Example 5]

The base layer prepared above in (IV-1) and acrylic resin film (B5) prepared above in (III) were set in lower and upper chambers of vacuum thermocompression machine (MP-22S by Meiki Co., Ltd.), respectively. The lower and upper chambers were set at a temperature of 180°C and 120°C, respectively. Once the base layer and the acrylic resin film were fully heated, they were compressed at 4 MPa for 90 seconds to form a multilayer substrate. A PC resin laminate was prepared by coating the multilayer substrate on its layer B with hard coat composition (S1) in (V) by the flow coating technique such that the coating might have a thickness of 4.0 $\mu$m after heat curing, statically holding the coating at 25°C for 15 minutes, and heat curing at 120°C for 1 hour. The results are shown in Table 2.

[Comparative Example 1]

A PC resin laminate was prepared by coating the coextruded substrate fabricated from (A1) and (B1) in (II) and (III) on its layer B with hard coat composition (T1) in (V) by the flow coating technique such that the coating might have a thickness of 4.0 $\mu$m after heat curing, statically holding the coating at 25°C for 15 minutes, and heat curing at 120°C for 1 hour. The results are shown in Table 3.

[Comparative Example 2]

A PC resin laminate was prepared by coating the coextruded substrate fabricated from (A1) and (B1) in (II) and (III) on its layer B with hard coat composition (T2) in (V) by the flow coating technique such that the coating might have a thickness of 4.0 $\mu$m after heat curing, statically holding the coating at 25°C for 15 minutes, and heat curing at 120°C for 1 hour. The results are shown in Table 3.

[Comparative Example 3]

The acrylic resin coating composition (B4) prepared above in (III) was coated on one surface of the base layer prepared above in (IV-1) by the flow coating technique such that the coating might have a thickness of 8.0 $\mu$m after heat curing, statically held at 25°C for 20 minutes, and heat cured at 130°C for 1 hour.
Next, hard coat composition (S1) in (V) was coated thereon by the flow coating technique such that the coating might have a thickness of 4.0 $\mu$m after heat curing, statically held at 25°C for 20 minutes, and heat cured at 120°C for 1 hour. The results are shown in Table 3.

[Comparative Example 4]

The acrylic resin coating composition (B4) prepared above in (III) was coated on one surface of the base layer prepared above in (IV-1) by the flow coating technique such that the coating might have a thickness of 8.0 $\mu$m after heat curing, statically held at 25°C for 20 minutes, and heat cured at 130°C for 1 hour.
Next, hard coat composition (T3) in (V) was coated thereon by the flow coating technique such that the coating might have a thickness of 4.0 $\mu$m after heat curing, statically held at 25°C for 20 minutes, and heat cured at 120°C for 1 hour. The results are shown in Table 3.

[Comparative Example 5]

The hard coat composition (T4) in (V) was coated on one surface of the base layer prepared above in (IV-1) by the flow coating technique such that the coating might have a thickness of 4.0 $\mu$m after heat curing, statically held at 25°C for 1 minute and at 80°C for 1 minute, and cured with UV radiation from a high-pressure mercury lamp in an integral dose of 600 mJ/cm$^2$. The results are shown in Table 2.

[Comparative Example 6]

A PC resin laminate was prepared by coating the base layer prepared above in (IV-1) with hard coat composition (T5) in (V) by the flow coating technique such that the coating might have a thickness of 4.0 μm after heat curing, statically holding at 25°C for 15 minutes, and heat curing at 130°C for 1 hour. The results are shown in Table 3.

[Comparative Example 7]

A PC resin laminate was prepared by coating the coextruded substrate fabricated from (A1) and (B1) in (II) and (III) on its layer B with hard coat composition (T3) in (V) by the flow coating technique such that the coating might have a thickness of 4.0 μm after heat curing, statically holding the coating at 25°C for 15 minutes, and heat curing at 120°C for 1 hour. The results are shown in Table 3.

[Reference Example]

The cured films of silicone hard coat compositions (S1, S2, T1, T2 and T3) prepared above in (V) were measured for transmittance by a UV/Vis spectrophotometer (Shimadzu Corp.). The results are shown in FIG. 2. As is evident from FIG. 2, the cured films of S1, S2 and T1 have good transparency in the visible region (400-700 nm) and good shielding in the UV region (200-400 nm). In contrast, the cured film of T2 has a half reduced shielding ability in the UV region, and the cured film of T3 has little. It is demonstrated that the core/shell type tetragonal titanium oxide solid-solution particle dispersion as component (c-1) exerts an outstanding UV-shielding effect. Of the cured films of S1, S2 and T1 having good UV shielding, the films of S1 and S2 are devoid of problems even in the weathering test of 6,000 hours as is evident from Tables 2 and 3, whereas the film of T1 using core/shell type tetragonal titanium oxide non-solid-solution particle dispersion as component (c-1) shows cracking and peeling in the weathering test of 6,000 hours. It is demonstrated that the core/shell type tetragonal titanium oxide solid-solution particle dispersion as component (c-1) exerts an outstanding weather resistance improving effect.

[Table 2]

| | | Example | | | | |
|---|---|---|---|---|---|---|
| | | 1 | 2 | 3 | 4 | 5 |
| Substrate | Layer A | A1 | A1 | A1 | A1 | A1 |
| | Layer B | B1 | B1 | B2 | B3 | B5 |
| Hard coat layer | Layer C | S1 | S2 | S1 | S1 | S1 |
| Evaluation results | | | | | | |
| Transparency | Tt (%) | 90 | 89 | 91 | 90 | 90 |
| | Hz (%) | 0.3 | 1.1 | 0.3 | 0.2 | 0.2 |
| Mar resistance △Hz | | 3 | 3 | 3 | 3 | 3 |
| Adhesion of hard coat layer | | 100 | 100 | 100 | 100 | 100 |
| Adhesion after boiling water test | | 100 | 100 | 100 | 100 | 100 |
| Weathering test of 1,000 hours | Yellowness index △YI | 2 | 2 | 2 | 2 | 2 |
| | Weathering crack resistance | ○ | ○ | ○ | ○ | ○ |
| | Weathering adhesion | 100 | 100 | 100 | 100 | 100 |
| | Weathering peel | ○ | ○ | ○ | ○ | ○ |
| Weathering test of 6,000 hours | Yellowness index △YI | 3 | 3 | 9 | 6 | 3 |
| | Weathering crack resistance | ○ | ○ | ○ | ○ | ○ |
| | Weathering adhesion | 100 | 100 | 100 | 100 | 100 |
| | Weathering peel | ○ | ○ | ○ | ○ | ○ |

(continued)

| Evaluation results | | | | | | |
|---|---|---|---|---|---|---|
| Bending test | Radius of curvature (R) | 76 | 80 | 70 | 77 | 80 |
| Evaluation of critical stress | 23°C × 24hr (MPa) | no cracks | no cracks | no cracks | no cracks | no cracks |
| | 80°C × 114hr (MPa) | 18 | 18 | 22 | 20 | 18 |
| | 110°C × 21hr (MPa) | 9 | 9 | 11 | 10 | 9 |

[Table 3]

| | | Comparative Example | | | | | | |
|---|---|---|---|---|---|---|---|---|
| | | 1 | 2 | 3 | 4 | 5 | 6 | 7 |
| Substrate | Layer A | A1 | A1 | A1 | A1 | A1 | A1 | A1 |
| | Layer B | B1 | B1 | B4 | B4 | - | - | B1 |
| Hard coat layer | Layer C | T1 | T2 | S1 | T3 | T4 | T5 | T3 |
| Evaluation results | | | | | | | | |
| Transparency | Tt (%) | 90 | 90 | 91 | 91 | 90 | 89 | 90 |
| | Hz (%) | 0.3 | 0.2 | 0.4 | 0.3 | 0.2 | 0.2 | 0.2 |
| Mar resistance ΔHz | | 3 | 3 | 5 | 4 | 3 | 9 | 4 |
| Adhesion of hard coat layer | | 100 | 100 | 100 | 100 | 100 | 100 | 100 |
| Adhesion after boiling water test | | 100 | 100 | 100 | 100 | 100 | 100 | 100 |
| Weathering test of 1,000 hours | Yellowness index ΔYI | 2 | 2 | 1 | 1 | - | 1 | 1 |
| | Weathering crack resistance | ○ | ○ | ○ | ○ | × | ○ | ○ |
| | Weathering adhesion | 100 | 100 | 100 | 100 | 0 | 100 | 100 |
| | Weathering peel | ○ | ○ | ○ | ○ | × | ○ | ○ |
| Weathering test of 6,000 hours | Yellowness index ΔYI | - | - | 4 | - | - | - | - |
| | Weathering crack resistance | × | × | ○ | × | × | × | × |
| | Weathering adhesion | 0 | 0 | 100 | 0 | 0 | 0 | 0 |
| | Weathering peel | × | × | ○ | × | × | × | × |
| Bending test | Radius of curvature (R) | 90 | 78 | 126 | 132 | 150 | 58 | 98 |
| Evaluation of critical stress | 23°C × 24hr (MPa) | no cracks | no cracks | no cracks | no cracks | no cracks | no cracks | no cracks |
| | 80°C × 114hr (MPa) | 16 | 21 | 15 | 15 | 12 | no cracks | 16 |
| | 110°C × 21hr (MPa) | 8 | 10 | 7 | 8 | 5 | no cracks | 8 |

INDUSTRIAL APPLICABILITY

Due to improved mar resistance, UV shielding, outdoor durability, and bend workability, the laminate of the invention can find a wide variety of applications including windows and windshields of transporting vehicles such as automobiles and aircraft, windows of buildings, and roadside noise barriers. Accordingly, the invention exerts outstanding industrial effects on outdoor use.

REFERENCE SIGNS LIST

1    ellipse center
2    ellipse major axis radius (10 cm)
3    ellipse minor axis radius (4 cm)
4    jig width (4 cm)
5    holders (width 1 cm)
6    horizontal distance (cm) from the ellipse center to the site of cracking with minimum distortion
7    polycarbonate resin laminate
8    the site of cracking with minimum distortion

**Claims**

**1.** A polycarbonate resin laminate comprising a multilayer substrate comprising a polycarbonate resin layer (layer A) and a UV-absorptive thermoplastic resin layer (layer B) formed and laminated on one surface or both surfaces of layer A, and a silicone hard coat layer (layer C) formed on the UV-absorptive thermoplastic resin layer by coating and curing a silicone hard coat composition thereto, wherein
layer B is formed of a thermoplastic resin containing a benzotriazole or triazine as a UV absorber, and
layer C is a cured film of a said silicone hard coat composition comprising the following components (c-1) to (c-5) :

(c-1) a core/shell type tetragonal titanium oxide solid solution dispersion which is a dispersion of core/shell type tetragonal titanium oxide solid solution particles in at least one dispersing medium selected from water and alcohols, the core/shell type tetragonal titanium oxide solid solution particles each consisting of a core of nano-particulate tetragonal titanium oxide having tin and manganese incorporated in solid solution and a shell of silicon oxide around the core, the nano-particulate cores having a volume basis 50% cumulative distribution diameter ($D_{50}$) of up to 30 nm as measured by a dynamic light scattering method using laser light, the core/shell type solid solution particles having a volume basis 50% cumulative distribution diameter ($D_{50}$) of up to 50 nm, the amount of tin incorporated in solid solution providing a molar ratio Ti/Sn of 10 to 1,000 and the amount of manganese incorporated in solid solution providing a molar ratio Ti/Mn of 10 to 1,000,
(c-2) silicone resin obtained from (co)hydrolytic condensation of at least one of alkoxysilanes having the general formula (1) and partial hydrolytic condensates thereof,

$$(R^1)_m(R^2)_n Si(OR^3)_{4-m-n} \qquad (1)$$

wherein $R^1$ and $R^2$ are each independently hydrogen or a substituted or unsubstituted monovalent hydrocarbon group, $R^1$ and $R^2$ may bond together, $R^3$ is $C_1$-$C_3$ alkyl, m and n are independently 0 or 1 and m+n is 0, 1 or 2,
(c-3) a curing catalyst,
(c-4) a solvent, and optionally,
(c-5) colloidal silica;

the solid content of the core/shell type tetragonal titanium oxide solid solution dispersion (c-1) being 1 to 30% by weight based on the solid content of the silicone resin (c-2).

**2.** The polycarbonate resin laminate of claim 1 wherein the multilayer substrate is one prepared by forming and laminating the polycarbonate resin layer (layer A) and the UV-absorptive thermoplastic resin layer (layer B) by any one of co-extrusion, thermocompression bonding, and insert molding techniques.

**3.** The polycarbonate resin laminate of claim 1 or 2 wherein the UV-absorptive thermoplastic resin layer (layer B) is formed of a (meth)acrylic resin composition.

4. The polycarbonate resin laminate of any one of claims 1 to 3 wherein the UV-absorptive thermoplastic resin layer (layer B) comprises a (meth)acrylic rubber component.

5. The polycarbonate resin laminate of any one of claims 1 to 4 wherein layer C is a cured film of a said silicone hard coat composition in which the solid content of the silicone resin (c-2) is 100 parts by weight, and the colloidal silica (c-5) is present in an amount of 5 to 100 parts by weight.

6. The polycarbonate resin laminate of any one of claims 1 to 5 which cracks at a radius of curvature R of 100 mm or less in a three-point flexural test according to JIS K7171.

7. A bonded structure comprising a structural member bonded and attached onto the thermoplastic resin layer (layer B) or hard coat layer (layer C) of a polycarbonate resin laminate of any one of claims 1 to 6, via a bonding primer layer and an elastic adhesive layer in sequence.


**Patentansprüche**

1. Polycarbonatharzlaminat, das ein mehrschichtiges Substrat umfasst, das eine Polycarbonatharzschicht (Schicht A) und eine UV-absorbierende thermoplastische Harzschicht (Schicht B), die auf einer Oberfläche oder auf beiden Oberfläche von Schicht A ausgebildet und darauf laminiert ist, und eine auf der UV-absorbierenden thermoplastischen Harzschicht durch Aufbringen und Härten einer Siliconharzbeschichtungszusammensetzung ausgebildete Silikonharzschicht (Schicht C) umfasst, wobei

Schicht B aus einem thermoplastischen Harz besteht, das ein Benzotriazol oder Triazin als UV-Absorptionsmittel umfasst, und

Schicht C ein gehärteter Film aus einer Siliconharzbeschichtungszusammensetzung ist, welche die folgenden Komponenten (c-1) bis (c-5) umfasst:

(c-1) eine tetragonale Titanoxid-Festlösungsdispersion vom Kern/Hülle-Typ, bei der es sich um eine Dispersion von tetragonalen Titanoxid-Festlösungspartikeln vom Kern/Hülle-Typ in zumindest einem Dispergiermedium handelt, das aus Wasser und Alkoholen ausgewählt ist, wobei die tetragonalen Titanoxid-Festlösungspartikel vom Kern/Hülle-Typ jeweils aus einem Kern aus nanopartikulärem tetragonalem Titanoxid mit in fester Lösung enthaltenem Zinn und Mangan bestehen und eine Hülle aus Siliciumoxid um den Kern herum umfassen, wobei die nanopartikulären Kerne, gemessen mittels dynamischem Lichtstreuverfahren unter Einsatz von Laserlicht, einen volumenbezogenen 50%-Summenverteilungsdurchmesser ($D_{50}$) von bis zu 30 nm aufweisen, die Festlösungspartikel vom Kern/Hülle-Typ einen volumenbezogenen 50%-Summenverteilungsdurchmesser ($D_{50}$) von bis zu 50 nm aufweisen, die Menge an in fester Lösung enthaltenem Zinn ein Molverhältnis Ti/Sn von 10 bis 1.000 ergibt und die Menge an in fester Lösung enthaltenem Mangan ein Molverhältnis Ti/Mn von 10 bis 1.000 ergibt,
(c-2) ein Siliconharz, das aus (co)hydrolytischer Kondensation von zumindest einem aus Alkoxysilanen der allgemeinen Formel (1) und partiellen hydrolytischen Kondensaten davon erhalten wurde,

$$(R^1)_m(R^2)_n Si(OR^3)_{4-m-n} \qquad (1)$$

worin $R^1$ und $R^2$ jeweils unabhängig voneinander Wasserstoff oder eine substituierte oder unsubstituierte einwertige Kohlenwasserstoffgruppe sind und $R^1$ und $R^2$ gegebenenfalls verbunden sind, $R^3$ $C_1$-$C_3$-Alkyl ist, m und n unabhängig voneinander 0 oder 1 sind und gilt: m+n = 0, 1 oder 2,
(c-3) einen Härtungskatalysator,
(c-4) ein Lösungsmittel; und gegebenenfalls
(c-5) Kieselsol;

wobei der Feststoffgehalt der tetragonalen Titanoxid-Festlösungsdispersion vom Kern/Hülle-Typ (c-1), bezogen auf den Feststoffgehalt des Siliconharzes (c-2), 1 bis 30 Gew.-% beträgt.

2. Polycarbonatharzlaminat nach Anspruch 1, wobei das mehrschichtige Substrat eines ist, das durch Ausbilden und Auflaminieren der Polycarbonatharzschicht (Schicht A) und einer UV-absorbierenden thermoplastischen Harzschicht (Schicht B) durch ein aus Coextrusion, Thermokompression und Inserttechnik ausgewähltes Verfahren hergestellt ist.

3. Polycarbonatharzlaminat nach Anspruch 1 oder 2, wobei die UV-absorbierende thermoplastische Harzschicht (Schicht B) aus einer (Meth)acrylharzzusammensetzung besteht.

4. Polycarbonatharzlaminat nach einem der Ansprüche 1 bis 3, wobei die UV-absorbierende thermoplastische Harzschicht (Schicht B) eine (Meth)acrylkautschukzusammensetzung umfasst.

5. Polycarbonatharzlaminat nach einem der Ansprüche 1 bis 4, wobei die Schicht C ein gehärteter Film aus der Siliconharzbeschichtungszusammensetzung ist, in welcher der Feststoffgehalt des Siliconharzes (c-2) 100 Gewichtsteile beträgt und das Kieselsol (c-5) in einer Menge von 5 bis 100 Gewichtsteilen enthalten ist.

6. Polycarbonatharzlaminat nach einem der Ansprüche 1 bis 5, das bei einer Dreipunktbiegeprüfung gemäß JIS K7171 bei einem Krümmungsradius R von 100 mm oder weniger bricht.

7. Verbundstruktur, die ein Strukturelement umfasst, das an die thermoplastische Harzschicht (Schicht B) oder Siliconharzschicht (Schicht C) eines Polycarbonatharzlaminats nach einem der Ansprüche 1 bis 6 durch eine Abfolge aus einer Haftgrundierschicht und einer elastischen Haftschicht gebunden und an dieser befestigt ist.

## Revendications

1. Stratifié en résine de polycarbonate comprenant un substrat multicouche comprenant une couche de résine de polycarbonate (couche A) et une couche de résine thermoplastique absorbant les UV (couche B) formée et stratifiée sur une surface ou les deux surfaces de la couche A, et une couche de revêtement dur en silicone (couche C) formée sur la couche de résine thermoplastique absorbant les UV par revêtement et durcissement d'une composition de revêtement dur en silicone sur celle-ci, dans lequel

la couche B est formée d'une résine thermoplastique contenant un benzotriazole ou une triazine en tant qu'absorbant d'UV, et

la couche C est un film durci d'une dite composition de revêtement dur en silicone comprenant les composants (c-1) à (c-5) suivants :

(c-1) une dispersion en solution solide d'oxyde de titane tétragonal de type noyau-enveloppe qui est une dispersion de particules en solution solide d'oxyde de titane tétragonal de type noyau-enveloppe dans au moins un milieu de dispersion choisi parmi l'eau et les alcools, les particules en solution solide d'oxyde de titane tétragonal de type noyau-enveloppe étant chacune constituées d'un noyau d'oxyde de titane tétragonal nano-particulaire contenant de l'étain et du manganèse incorporés en solution solide et d'une enveloppe d'oxyde de silicium autour du noyau, les noyaux nano-particulaires ayant un diamètre à une répartition cumulée de 50 % en volume ($D_{50}$) allant jusqu'à 30 nm tel que mesuré par un procédé de diffusion dynamique de la lumière utilisant une lumière laser, les particules en solution solide de type noyau-enveloppe ayant un diamètre à une répartition cumulée de 50 % en volume ($D_{50}$) allant jusqu'à 50 nm, la quantité d'étain incorporé en solution solide fournissant un rapport molaire Ti/Sn de 10 à 1 000 et la quantité de manganèse incorporé en solution solide fournissant un rapport molaire Ti/Mn de 10 à 1 000,

(c-2) une résine de silicone obtenue par condensation (co)hydrolytique d'au moins l'un des alcoxysilanes répondant à la formule générale (1) et des condensats hydrolytiques partiels de ceux-ci,

$$(R^1)_m(R^2)_nSi(OR^3)_{4-m-n} \qquad (1)$$

dans laquelle $R^1$ et $R^2$ représentent chacun indépendamment un atome d'hydrogène ou un groupe hydrocarbure monovalent substitué ou non substitué, $R^1$ et $R^2$ peuvent se lier l'un à l'autre, $R^3$ représente un groupe alkyle en $C_1$ à $C_3$, m et n valent indépendamment 0 ou 1 et m + n vaut 0, 1 ou 2,

(c-3) un catalyseur de durcissement,

(c-4) un solvant, et facultativement,

(c-5) de la silice colloïdale ;

la teneur en matières solides de la dispersion en solution solide d'oxyde de titane tétragonal de type noyau-enveloppe (c-1) étant de 1 à 30 % en poids sur la base de la teneur en matières solides de la résine de silicone (c-2).

**2.** Stratifié en résine de polycarbonate selon la revendication 1 dans lequel le substrat multicouche est l'un préparé par formation et stratification de la couche de résine de polycarbonate (couche A) et de la couche de résine thermoplastique absorbant les UV (couche B) par l'une quelconque des techniques de co-extrusion, de liaison par thermocompression et de moulage par insertion.

**3.** Stratifié en résine de polycarbonate selon la revendication 1 ou 2 dans lequel la couche de résine thermoplastique absorbant les UV (couche B) est formée d'une composition de résine (méth)acrylique.

**4.** Stratifié en résine de polycarbonate selon l'une quelconque des revendications 1 à 3 dans lequel la couche de résine thermoplastique absorbant les UV (couche B) comprend un composant de caoutchouc (méth)acrylique.

**5.** Stratifié en résine de polycarbonate selon l'une quelconque des revendications 1 à 4 dans lequel la couche C est un film durci d'une dite composition de revêtement dur en silicone dans lequel la teneur en matières solides de la résine de silicone (c-2) est de 100 parties en poids, et la silice colloïdale (c-5) est présente en une quantité de 5 à 100 parties en poids.

**6.** Stratifié en résine de polycarbonate selon l'une quelconque des revendications 1 à 5 qui se fissure à un rayon de courbure R de 100 mm ou moins dans un essai de flexion en trois points selon la norme JIS K7171.

**7.** Structure liée comprenant un élément structural lié et fixé sur la couche de résine thermoplastique (couche B) ou la couche de revêtement dur (couche C) d'un stratifié en résine de polycarbonate selon l'une quelconque des revendications 1 à 6, par l'intermédiaire d'une couche d'amorce de liaison et d'une couche adhésive élastique successivement.

# FIG.1

# FIG.2

**EP 2 979 862 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2708513 A
- JP 2001198947 A
- JP S5692059 A
- JP H01149878 A
- JP H04106161 A
- JP 3102696 B
- JP 2001047574 A
- JP 3841141 B
- JP 2010202731 A
- JP 2012077267 A
- JP 2004001393 A
- JP 2011183758 A
- JP 2002129003 A
- JP H06172508 A
- JP H08027370 A
- JP 2001055435 A
- JP 2002117580 A
- JP S59031130 A
- JP S62196113 A
- JP H07009484 A

### Non-patent literature cited in the description

- Adhesives and Sealants: General Knowledge, Application Techniques. New Curing Techniques. Elsevier Science Ltd, 2006, 385

31